# EUROPEAN PATENT APPLICATION

(11) **EP 4 221 005 A1**
(43) Date of publication of application: **02.08.2023**
(21) Application number: 21884893.5
(22) Date of filing: 08.10.2021

(54) **MULTIPATH TRANSMISSION METHOD AND COMMUNICATION APPARATUS**

(30) Priority: 27.10.2020 CN 202011163372
(71) Applicant: Huawei Technologies Co., Ltd., Shenzhen, Guangdong 518129 (CN)
(72) Inventor: XU, Shengfeng, Shenzhen, Guangdong 518129 (CN); YANG, Yanmei, Shenzhen, Guangdong 518129 (CN); LI, Meng, Shenzhen, Guangdong 518129 (CN); LI, Yan, Shenzhen, Guangdong 518129 (CN)
(74) Representative: Gill Jennings & Every LLP
(86) International application number: PCT/CN2021/122592
(87) International publication number: WO 2022/089164

(57) **Abstract**

This application provides a multipath transmission method and a communication apparatus. In this solution, data of a remote terminal is transmitted through two paths, to improve data transmission reliability of the remote terminal. The solution includes: A user plane function node receives second information from a session management function node, where the second information is used by the user plane function node to replicate, to a second communication path, data that is of a remote terminal and that is transmitted through a first communication path; and the user plane function node replicates, based on the second information to the second communication path, the data that is of the remote terminal and that is transmitted through the first communication path. The first communication path is a first session of the remote terminal, and the second communication path includes a second session of a relay terminal corresponding to the remote terminal and a sidelink between the relay terminal and the remote terminal. Alternatively, the second communication path is a first session of the remote terminal, and the first communication path includes a second session of a relay terminal corresponding to the remote terminal and a sidelink between the relay terminal and the remote terminal.

## Description

This application claims priority to Chinese Patent Application No. 2020111633728, filed with the China National Intellectual Property Administration on October 27, 2020 and entitled "MULTIPATH TRANSMISSION METHOD AND COMMUNICATION APPARATUS", which is incorporated herein by reference in its entirety.

### TECHNICAL FIELD

This application relates to the communication field, and more specifically, to a multipath transmission method and a communication apparatus.

### BACKGROUND

In the communication field, to improve transmission reliability of a terminal, two end-to-end network layer transmission channels may be established between the terminal and a server. To be specific, the terminal establishes a connection to the server by using the two network layer transmission channels. For downlink data transmission, the server transmits same data by using the two end-to-end network layer transmission channels. After receiving the data, the terminal performs data deduplication.

However, in the foregoing solution, both the terminal and the server need to support a multipath transmission control protocol (multipath transmission control protocol, MPTCP) function. If the terminal or the server does not support the MPTCP function, the transmission reliability of the terminal cannot be improved by establishing two end-to-end network layer transmission channels. Therefore, how to improve the data transmission reliability of the terminal without considering whether the terminal and the server support the MPTCP function is an urgent problem to be resolved.

### SUMMARY

This application provides a multipath transmission method and a communication apparatus, to improve data transmission reliability of a remote terminal when the remote terminal or a server does not support an MPTCP function.

According to a first aspect, a multipath transmission method is provided, and includes: A user plane function node receives second information from a session management function node, where the second information is used by the user plane function node to replicate, to a second communication path, data that is of a remote terminal and that is transmitted through a first communication path; and the user plane function node replicates, based on the second information to the second communication path, the data that is of the remote terminal and that is transmitted through the first communication path. The first communication path is a first session of the remote terminal, and the second communication path includes: a second session of a relay terminal corresponding to the remote terminal and a sidelink between the relay terminal and the remote terminal; or the second communication path is a first session of the remote terminal, and the first communication path includes: a second session of a relay terminal corresponding to the remote terminal and a sidelink between the relay terminal and the remote terminal.

It should be understood that the session in this application may be a protocol data unit (protocol data unit, PDU) session.

According to the method provided in this application, the user plane function node may replicate, based on a request of the session management function node, the data of the remote terminal to the second communication path for transmission while transmitting the data of the remote terminal through the first communication path. In this way, the data of the remote terminal is transmitted through the two communication paths, to improve data transmission reliability of the remote terminal.

With reference to the first aspect, in some implementations of the first aspect, the second communication path is the first session, and the second session is only for transmitting the data of the remote terminal; the second information includes a first address, where the first address is an address corresponding to the first session; and the method further includes: The user plane function node receives a first data packet of the remote terminal, where the first data packet includes first data of the remote terminal and an address corresponding to the second session. That the user plane function node replicates, based on the second information to the second communication path, the data that is of the remote terminal and that is transmitted through the first communication path includes: The user plane function node sends the first data packet by using the second session; and the user plane function node sends a second data packet by using the first session, where the second data packet includes the first address and the first data.

With reference to the first aspect, in some implementations of the first aspect, the second communication path is the first session; the second information includes a first address and a second address, where the first address is an address corresponding to the first session, and the second address is an address for transmitting the data of the remote terminal by using the second session; and the method further includes: The user plane function node receives a third data packet of the remote terminal, where the third data packet includes second data of the remote terminal and the second address. That the user plane function node replicates, based on the second information to the second communication path, the data that is of the remote terminal and that is transmitted through the first communication path includes: The user plane function node sends the third data packet by using the second session; and the user plane function node sends a fourth data packet by using the first session, where the fourth data packet includes the first address and the second data.

With reference to the first aspect, in some implementations of the first aspect, the first communication path is the first session; the second information includes a second address, where the second address is an address for transmitting the data of the remote terminal by using the second session; and the method further includes: The user plane function node receives a fifth data packet of the remote terminal, where the fifth data packet includes third data of the remote terminal and an address corresponding to the first session. That the user plane function node replicates, based on the second information to the second communication path, the data that is of the remote terminal and that is transmitted through the first communication path includes: The user plane function node sends the fifth data packet by using the first session; and the user plane function node sends a sixth data packet by using the second session, where the sixth data packet includes the second address and the third data.

With reference to the first aspect, in some implementations of the first aspect, the second information further includes replication indication information, where the replication indication information indicates to replicate, to the second communication path, the data that is of the remote terminal and that is transmitted through the first communication path.

According to a second aspect, a multipath transmission method is provided, and includes: A session management function node receives first information from a first device, where the first information is for replicating, to a second communication path, data that is of a remote terminal and that is transmitted through a first communication path; and the session management function node sends second information to a user plane function node based on the first information, where the user plane function node is a user plane function node corresponding to the first communication path, and the second information is used by the user plane function node to replicate, to the second communication path, the data that is of the remote terminal and that is transmitted through the first communication path. The first communication path is a first session of the remote terminal, and the second communication path includes: a second session of a relay terminal corresponding to the remote terminal and a sidelink between the relay terminal and the remote terminal; or the second communication path is a first session of the remote terminal, and the first communication path includes: a second session of a relay terminal corresponding to the remote terminal and a sidelink between the relay terminal and the remote terminal.

Optionally, the first device is the relay terminal or a policy control function node.

According to the multipath transmission method provided in this application, the session management function node may request, based on a request of the relay terminal or the policy control function node, the user plane function node to replicate the data of the remote terminal to the second communication path for transmission while transmitting the data of the remote terminal through the first communication path. Therefore, the user plane function node may transmit the data of the remote terminal through the first communication path and the second communication path based on a status of the session management function node, to improve data transmission reliability of the remote terminal.

With reference to the second aspect, in some implementations of the second aspect, the first device is the relay terminal or a policy control function node, the second communication path is the first session, and the second session is only for transmitting the data of the remote terminal; and the second information includes a first address, where the first address is an address corresponding to the first session.

With reference to the second aspect, in some implementations of the second aspect, the first information includes: an identifier of the first session and an identifier of the remote terminal; and the method further includes: The session management function node determines the first address based on the first information.

With reference to the second aspect, in some implementations of the second aspect, the first information includes the first address.

With reference to the second aspect, in some implementations of the second aspect, the first device is the relay terminal or a policy control function node, and the second communication path is the first session; and the second information includes a first address and a second address, where the first address is an address corresponding to the first session, and the second address is an address for transmitting the data of the remote terminal by using the second session.

With reference to the second aspect, in some implementations of the second aspect, the first information includes: an identifier of the first session and an identifier of the remote terminal; and the method further includes: The session management function node determines the first address based on the identifier of the first session and the identifier of the remote terminal; and the session management function node determines the second address based on the identifier of the remote terminal.

With reference to the second aspect, in some implementations of the second aspect, the first information includes an identifier of the first session, an identifier of the remote terminal, and the second address; and the method further includes: The session management function node determines the first address based on the identifier of the first session and the identifier of the remote terminal.

With reference to the second aspect, in some implementations of the second aspect, the first information includes the first address and the second address.

With reference to the second aspect, in some implementations of the second aspect, the first device is the remote terminal or a policy control function node, and the first communication path is the first session; and
the second information includes a second address, where the second address is an address for transmitting the data of the remote terminal by using the second session.

With reference to the second aspect, in some implementations of the second aspect, the first information includes: an identifier of the second session and an identifier of the relay terminal; and the method further includes: The session management function node determines the second address based on the first information.

With reference to the second aspect, in some implementations of the second aspect, the first information includes the second address.

With reference to the second aspect, in some implementations of the second aspect, the first information includes replication indication information; and/or the second information includes the replication indication information, where the replication indication information indicates to replicate, to the second communication path, the data that is of the remote terminal and that is transmitted through the first communication path.

According to a third aspect, a multipath transmission method is provided, and includes: A remote terminal obtains third information; and the remote terminal sends the third information to a second device, where the third information is for replicating, to a second communication path, data that is of the remote terminal and that is transmitted through a first communication path. The first communication path is a first session of the remote terminal, and the second communication path includes: a second session of a relay terminal corresponding to the remote terminal and a sidelink between the relay terminal and the remote terminal; or the second communication path is a first session of the remote terminal, and the first communication path includes: a second session of a relay terminal corresponding to the remote terminal and a sidelink between the relay terminal and the remote terminal.

Optionally, the second device is the relay terminal or a session management function node.

According to the multipath transmission method provided in this application, the remote terminal may request the second device to replicate, to the second communication path, the data that is of the remote terminal and that is transmitted through the first communication path, so that the second device can request, based on a request of the remote terminal, a user plane function node to replicate, to the second communication path, the data that is of the remote terminal and that is transmitted through the first communication path.

With reference to the third aspect, in some implementations of the third aspect, the second device is the relay terminal, and the second communication path is the first session; and the third information includes an identifier of the first session or a first address, where the first address is an address corresponding to the first session.

With reference to the third aspect, in some implementations of the third aspect, the second device is a session management function node, the first communication path is the first session, and the second session is only for transmitting the data of the remote terminal; and the third information includes an identifier of the second session and an identifier of the relay terminal.

With reference to the third aspect, in some implementations of the third aspect, the second device is a session management function node, and the first communication path is the first session; and the third information includes a second address, where the second address is an address for transmitting the data of the remote terminal by using the second session. That the remote terminal obtains third information includes:

The remote terminal receives the second address from the relay terminal.

With reference to the third aspect, in some implementations of the third aspect, the third information further includes replication indication information, where the replication indication information indicates to replicate, to the second communication path, the data that is of the remote terminal and that is transmitted through the first communication path.

According to a fourth aspect, a multipath transmission method is provided, and includes: A relay terminal receives third information from a remote terminal, where the third information is for replicating, to a second communication path, data that is of the remote terminal and that is transmitted through a first communication path; and the relay terminal sends first information to a session management function node based on the third information, where the first information is for replicating, to the second communication path, the data that is of the remote terminal and that is transmitted through the first communication path, where the first communication path includes: a second session of the relay terminal corresponding to the remote terminal and a sidelink between the relay terminal and the remote terminal, and the second communication path is a first session of the remote terminal.

According to the multipath transmission method provided in this application, the relay terminal may send the first information to the session management function node based on a request of the remote terminal, to request to replicate, to the second communication path, the data that is of the remote terminal and that is transmitted through the first communication path. Further, the session management function node may request a user plane function node to replicate, to the second communication path, the data that is of the remote terminal and that is transmitted through the first communication path. The user plane function node may replicate, based on the request of the session management function node to the second communication path, the data that is of the remote terminal and that is transmitted through the first communication path, to improve data transmission reliability of the remote terminal.

With reference to the fourth aspect, in some implementations of the fourth aspect, the third information includes an identifier of the first session.

With reference to the fourth aspect, in some implementations of the fourth aspect, the first information includes: the identifier of the first session, and an identifier of the remote terminal; or the identifier of the first session, an identifier of the remote terminal, and a second address, where the second address is an address used by the relay terminal to transmit the data of the remote terminal by using the second session.

With reference to the fourth aspect, in some implementations of the fourth aspect, the third information includes a first address, where the first address is an address corresponding to the first session.

With reference to the fourth aspect, in some implementations of the fourth aspect, the first information includes: the first address; or the first address and a second address, where the second address is an address used by the relay terminal to transmit the data of the remote terminal by using the second session.

According to a fifth aspect, a multipath transmission method is provided, and includes: A session management function node receives first information from a first device, where the first device is a first relay terminal or a policy control function node, and the first information is for replicating, to a second communication path, data that is of a remote terminal and that is transmitted through a first communication path; and the session management function node sends second information to a user plane function node based on the first information, where the user plane function node is a user plane function node corresponding to the first communication path, and the second information is used by the user plane function node to replicate, to the second communication path, the data that is of the remote terminal and that is transmitted through the first communication path, where the first communication path includes a first sidelink between the first relay terminal and the remote terminal and a first session of the first relay terminal, and the second communication path includes a second sidelink between a second relay terminal and the remote terminal and a second session of the second relay terminal.

According to the multipath transmission method provided in this application, the session management function node may request, based on the first information sent by the first device, the user plane function node to replicate, to the second communication path, the data that is of the remote terminal and that is transmitted through the first communication path. The user plane function node may replicate, based on the request of the session management function node to the second communication path, the data that is of the remote terminal and that is transmitted through the first communication path, to improve data transmission reliability of the remote terminal.

With reference to the fifth aspect, in some implementations of the fifth aspect, the first session is only for transmitting the data of the remote terminal; and the second information includes a second address, where the second address is an address for transmitting the data of the remote terminal by using the second session.

With reference to the fifth aspect, in some implementations of the fifth aspect, the first information includes an identifier of the second session and an identifier of the second relay terminal; and the method further includes: The session management function node determines the second address based on the first information.

With reference to the fifth aspect, in some implementations of the fifth aspect, the first information includes the second address.

With reference to the fifth aspect, in some implementations of the fifth aspect, the second information includes a first address and a second address, where the first address is an address for transmitting the data of the remote terminal by using the first session, and the second address is an address for transmitting the data of the remote terminal by using the second session.

With reference to the fifth aspect, in some implementations of the fifth aspect, the first information includes an identifier of the second session, an identifier of the second relay terminal, and the first address. The method further includes: The session management function node determines the second address based on the identifier of the second session and the identifier of the second relay terminal.

With reference to the fifth aspect, in some implementations of the fifth aspect, the first information includes the first address and the second address.

With reference to the fifth aspect, in some implementations of the fifth aspect, the first information includes replication indication information; and/or the second information includes the replication indication information, where the replication indication information indicates the user plane function node to replicate, to the second communication path, the data that is transmitted through the first communication path.

According to a sixth aspect, this application provides a multipath transmission method, including: An access network node receives first information from a first session management function node, where the first information includes a first quality of service (quality of service, QoS) flow identifier of a first session and a first temporary identifier, where the first session is a session of a remote terminal, and the first temporary identifier is a temporary identifier assigned by the first session management function node to a first QoS flow; the access network node receives second information from a second session management function node, where the second information includes a second QoS flow identifier of a second session and the first temporary identifier, where the second session is a session of a relay terminal of the remote terminal, and both the remote terminal and the relay terminal access the access network node; and the access network node replicates, based on the first information and the second information, data of the first QoS flow to a second QoS flow for transmission.

According to the multipath transmission method provided in this application, the first session management function node may configure an association relationship between the first QoS flow and the second QoS flow for the access network node, so that when receiving the data of the first QoS flow, the access network node not only can transmit the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

According to a seventh aspect, a multipath transmission method is provided, and includes: A remote terminal receives a first temporary identifier from a first session management function node, where the first temporary identifier is a temporary identifier assigned by the first session management function node to a first QoS flow of a first session, and the first session is a session of the remote terminal; and the remote terminal sends third information to a relay terminal of the remote terminal, where the third information includes the first temporary identifier, and the third information is used by the relay terminal to request a second session management function node to configure an association relationship between the first QoS flow and a QoS flow of a second session for an access network node, where the second session is a session of the relay terminal, both the remote terminal and the relay terminal access the access network node, and the association relationship is used by the access network node to replicate, for transmission, data of the first QoS flow to the QoS flow of the second session associated with the first QoS flow.

According to the multipath transmission method provided in this application, the first session management function node may assign the temporary identifier to the first QoS flow, and the relay terminal may request, based on the temporary identifier, the second session management function node to configure the association relationship between the first QoS flow and the second QoS flow for the access network node, so that when receiving the data of the first QoS flow, the access network node not only can transmit, based on the association relationship, the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

With reference to the seventh aspect, in some implementations of the seventh aspect, before the remote terminal receives the first temporary identifier from the first session management function node, the method further includes: The remote terminal sends a first request message to the first session management function node, where the first request message includes a first QoS flow identifier, and the first request message is for requesting the first session management function node to assign a temporary identifier to the first QoS flow.

According to an eighth aspect, a multipath transmission method is provided, and includes: A first session management function node determines a first temporary identifier, where the first temporary identifier is a temporary identifier of a first QoS flow of a first session, and the first session is a session of a remote terminal; the first session management function node sends first information to an access network node, where the first information includes the first temporary identifier and a first QoS flow identifier; and the first session management function node sends the first temporary identifier to the remote terminal.

According to the multipath transmission method provided in this application, the first session management function node may assign the temporary identifier to the first QoS flow, and the first session management function node may notify the access network node of a relationship between the temporary identifier and the first QoS flow, and send the temporary identifier to the remote terminal.

With reference to the eighth aspect, in some implementations of the eighth aspect, before the first session management function node determines the first temporary identifier, the method further includes: The first session management function node receives a first request message from the remote terminal, where the first request message includes the first QoS flow identifier; and the first request message is for requesting the first session management function node to assign a temporary identifier to the first QoS flow.

According to a ninth aspect, a multipath transmission method is provided, and includes: A second session management function node receives fourth information from a relay terminal of a remote terminal, where the fourth information includes a first temporary identifier and an identifier of the remote terminal, or the fourth information includes a first temporary identifier and a second QoS flow identifier of a second session, where the first temporary identifier is a temporary identifier assigned by a first session management function node to a first QoS flow of a first session, the first session is a session of the remote terminal, the second session is a session of the relay terminal, and the remote terminal and the relay terminal access a same access network node; and the second session management function node sends second information to the access network node based on the fourth information, where the second information includes the second QoS flow identifier and the first temporary identifier, and the second information is used by the access network node to replicate data of the first QoS flow to a second QoS flow for transmission.

According to the multipath transmission method provided in this application, the second session management function node may configure an association relationship between the first QoS flow and the second QoS flow for the access network node, so that when receiving the data of the first QoS flow, the access network node not only can transmit the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

According to a tenth aspect, a multipath transmission method is provided, and includes: A relay terminal receives third information from a remote terminal, where the third information includes a first temporary identifier, the first temporary identifier is a temporary identifier assigned by a first session management function node to a first QoS flow of a first session, the first session is a session of the remote terminal of the relay terminal, and the remote terminal and the relay terminal access a same access network node; and the relay terminal sends fourth information to a second session management function node based on the third information, where the fourth information includes the first temporary identifier and an identifier of the remote terminal, or the fourth information includes the first temporary identifier and a second QoS flow identifier of a second session, where the second session is a session of the relay terminal, and the fourth information is used by the second session management function node to configure an association relationship between the first QoS flow and a QoS flow of the second session for the access network node, where the association relationship is used by the access network node to replicate, for transmission, data of the first QoS flow to the QoS flow of the second session associated with the first QoS flow.

According to the multipath transmission method provided in this application, the first session management function node may assign the temporary identifier to the first QoS flow, and the relay terminal may request, based on the temporary identifier, the second session management function node to configure the association relationship between the first QoS flow and the second QoS flow for the access network node, so that when receiving the data of the first QoS flow, the access network node not only can transmit, based on the association relationship, the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

According to an eleventh aspect, a multipath transmission method is provided, and includes: An access network node receives first information from a first session management function node, where the first information includes a first QoS flow identifier of a first session and a first temporary identifier, where the first temporary identifier is a temporary identifier assigned by the first session management function node to a first QoS flow; the access network node receives second information from a second session management function node, where the second information includes a second QoS flow identifier of a second session and the first temporary identifier; and the access network node replicates, based on the first information and the second information, data of the first QoS flow to a second QoS flow for transmission, where the first session is a session of a relay terminal of a remote terminal, the second session is a session of the remote terminal, and both the remote terminal and the relay terminal access the access network node.

According to the multipath transmission method provided in this application, the first session management function node may configure an association relationship between the first QoS flow and the second QoS flow for the access network node, so that when receiving the data of the first QoS flow, the access network node not only can transmit the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

According to a twelfth aspect, a multipath transmission method is provided, and includes: A remote terminal receives a first temporary identifier and a first QoS flow identifier from a first session management function node, where the first temporary identifier is a temporary identifier assigned by the first session management function node to a first QoS flow of a first session, the first session is a session of a relay terminal of the remote terminal, and the remote terminal and the relay terminal access a same access network node; and the remote terminal sends third information to a second session management function node, where the third information includes the first temporary identifier and a second QoS flow identifier of a second session, the second session is a session of the remote terminal, and the third information is for requesting the second session management function node to configure an association relationship between the first QoS flow and a second QoS flow for the access network node, where the association relationship is used by the access network node to replicate data of the first QoS flow to the second QoS flow for transmission.

According to the multipath transmission method provided in this application, the first session management function node may assign the temporary identifier to the first QoS flow, and the remote terminal may request, based on the temporary identifier, the second session management function node to configure the association relationship between the first QoS flow and the second QoS flow for the access network node, so that when receiving the data of the first QoS flow, the access network node not only can transmit, based on the association relationship, the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

According to a thirteenth aspect, a multipath transmission method is provided, and includes: A first session management function node determines a first temporary identifier, where the first temporary identifier is a temporary identifier of a first QoS flow of a first session, and the first session is a session of a relay terminal of a remote terminal; the first session management function node sends first information to an access network node, where the first information includes the first temporary identifier and a first QoS flow identifier; and the first session management function node sends the first temporary identifier and the first QoS flow identifier to the relay terminal.

According to the multipath transmission method provided in this application, the first session management function node may assign the temporary identifier to the first QoS flow, and the first session management function node may notify the access network node of a relationship between the temporary identifier and the first QoS flow, and send the temporary identifier to the relay terminal. Then, the relay terminal may send the temporary identifier to the remote terminal.

According to a fourteenth aspect, a multipath transmission method is provided, and includes: A second session management function node receives third information from a remote terminal, where the third information includes a first temporary identifier and a second QoS flow identifier of a second session, where the first temporary identifier is a temporary identifier assigned by a first session management function node to a first QoS flow of a first session, the first session is a session of a relay terminal, the second session is a session of the remote terminal, and the remote terminal and the relay terminal access a same access network node; and the second session management function node sends second information to the access network node based on the third information, where the second information includes the second QoS flow identifier and the first temporary identifier, and the second information is used by the access network node to replicate data of the first QoS flow to a second QoS flow for transmission.

According to the multipath transmission method provided in this application, the second session management function node may configure an association relationship between the first QoS flow and the second QoS flow for the access network node, so that when receiving the data of the first QoS flow, the access network node not only can transmit, based on the association relationship, the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

According to a fifteenth aspect, a multipath transmission method is provided, and includes: An access network node receives first information from a first session management function node, where the first information includes a first QoS flow identifier of a first session and a first temporary identifier, where the first temporary identifier is a temporary identifier assigned by the first session management function node to a first QoS flow; the access network node receives second information from a second session management function node, where the second information includes a second QoS flow identifier of a second session and the first temporary identifier; and the access network node replicates, based on the first information and the second information, data of the first QoS flow to a second QoS flow for transmission, where the first session is a session of a first relay terminal of a remote terminal, the second session is a session of a second relay terminal of the remote terminal, and both the first relay terminal and the second relay terminal access the access network node.

According to the multipath transmission method provided in this application, the first session management function node may configure an association relationship between the first QoS flow and the second QoS flow for the access network node, so that when receiving the data of the first QoS flow, the access network node not only can transmit, based on the association relationship, the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

According to a sixteenth aspect, a multipath transmission method is provided, and includes: A remote terminal receives a first temporary identifier and a first QoS flow identifier from a first session management function node, where the first temporary identifier is a temporary identifier assigned by the first session management function node to a first QoS flow of a first session, and the first session is a session of a first relay terminal of the remote terminal; and the remote terminal sends third information to a second relay terminal of the remote terminal, where the third information includes the first temporary identifier, and the third information is used by the second relay terminal to request a second session management function node to configure an association relationship between the first QoS flow and a QoS flow of a second session for an access network node, where the second session is a session of the second relay terminal, the first relay terminal and the second relay terminal access the same access network node, and the association relationship is used by the access network node to replicate, for transmission, data of the first QoS flow to the QoS flow of the second session associated with the first QoS flow.

According to the multipath transmission method provided in this application, the first session management function node may assign the temporary identifier to the first QoS flow, and the second relay terminal may request, based on the temporary identifier, the second session management function node to configure the association relationship between the first QoS flow and the second QoS flow for the access network node, so that when receiving the data of the first QoS flow, the access network node not only can transmit, based on the association relationship, the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

According to a seventeenth aspect, a multipath transmission method is provided, and includes: A first session management function node determines a first temporary identifier, where the first temporary identifier is a temporary identifier of a first QoS flow of a first session, and the first session is a session of a first relay terminal of a remote terminal; the first session management function node sends first information to an access network node, where the first information includes the first temporary identifier and a first QoS flow identifier; and the first session management function node sends the first temporary identifier and the first QoS flow identifier to the first relay terminal.

According to the multipath transmission method provided in this application, the first session management function node may assign the temporary identifier to the first QoS flow, and the first session management function node may notify the access network node of a relationship between the temporary identifier and the first QoS flow, and send the temporary identifier to the relay terminal. Then, the relay terminal may send the temporary identifier to the remote terminal.

According to an eighteenth aspect, a multipath transmission method is provided, and includes: A second session management function node receives fourth information from a second relay terminal of a remote terminal, where the fourth information includes a first temporary identifier and an identifier of the remote terminal, or the fourth information includes a first temporary identifier and a second QoS flow identifier of a second session, where the first temporary identifier is a temporary identifier assigned by a first session management function node to a first QoS flow of a first session, the first session is a session of a first relay terminal of the remote terminal, the second session is a session of the second relay terminal, and the first relay terminal and the second relay terminal access a same access network node; and the second session management function node sends second information to the access network node based on the fourth information, where the second information includes the second QoS flow identifier and the first temporary identifier, and the second information is used by the access network node to replicate data of the first QoS flow to a second QoS flow for transmission.

According to the multipath transmission method provided in this application, the second session management function node may configure an association relationship between the first QoS flow and the second QoS flow for the access network node, so that when receiving the data of the first QoS flow, the access network node not only can transmit, based on the association relationship, the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

According to a nineteenth aspect, a multipath transmission method is provided, and includes: A second relay terminal receives third information from a remote terminal, where the third information includes a first temporary identifier, the first temporary identifier is a temporary identifier assigned by a first session management function node to a first QoS flow of a first session, the first session is a session of a first relay terminal of the remote terminal of the second relay terminal, and the first relay terminal and the second relay terminal access a same access network node; and the second relay terminal sends fourth information to a second session management function node based on the third information, where the fourth information includes the first temporary identifier and an identifier of the remote terminal, or the fourth information includes the first temporary identifier and a second QoS flow identifier of a second session, where the second session is a session of the second relay terminal, and the fourth information is used by the second session management function node to configure an association relationship between the first QoS flow and a QoS flow of the second session for the access network node, where the association relationship is used by the access network node to replicate, for transmission, data of the first QoS flow to the QoS flow of the second session associated with the first QoS flow.

According to the multipath transmission method provided in this application, the first session management function node may assign the temporary identifier to the first QoS flow, and the second relay terminal may request, based on the temporary identifier, the second session management function node to configure the association relationship between the first QoS flow and the second QoS flow for the access network node, so that when receiving the data of the first QoS flow, the access network node not only can transmit, based on the association relationship, the data to the remote terminal by using the first QoS flow, but also can replicate the data of the first QoS flow to the second QoS flow, and then transmit the data to the remote terminal by using the second QoS flow. In this way, data transmission reliability of the remote terminal can be improved.

According to a twentieth aspect, a communication apparatus is provided, and includes modules or units configured to perform the method provided in any one of the first aspect to the nineteenth aspect, or includes modules or units configured to perform the method in any one of the possible implementations of the first aspect to the nineteenth aspect.

According to a twenty-first aspect, an apparatus is provided, and includes a processor. The processor is coupled to a memory, and may be configured to execute instructions in the memory, so that the apparatus performs the method provided in any one of the first aspect to the nineteenth aspect, or performs the method in any one of the possible implementations of the first aspect to the nineteenth aspect. Optionally, the apparatus further includes the memory. Optionally, the apparatus further includes an interface circuit, and the processor is coupled to the interface circuit.

According to a twenty-second aspect, a processor is provided, and includes: an input circuit, an output circuit, and a processing circuit. The processing circuit is configured to receive a signal by using the input circuit, and transmit a signal by using the output circuit, so that the processor performs the method provided in any one of the first aspect to the nineteenth aspect, or performs the method in one of the possible implementations of the first aspect to the nineteenth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the circuits are not limited in embodiments of this application.

According to a twenty-third aspect, a processing apparatus is provided, and includes a processor and a memory. The processor is configured to read instructions stored in the memory, receive a signal by using a receiver, and transmit a signal by using a transmitter, to perform the method provided in any one of the first aspect to the nineteenth aspect, or perform the method in one of the possible implementations of the first aspect to the nineteenth aspect.

Optionally, there are one or more processors, and there are one or more memories.

Optionally, the memory may be integrated into the processor, or the memory and the processor are separately disposed.

In a specific implementation process, the memory may be a non-transitory (non-transitory) memory, for example, a read only memory (read only memory, ROM). The memory and the processor may be integrated on a same chip, or may be disposed on different chips. A type of the memory and a manner in which the memory and the processor are disposed are not limited in this embodiment of this application.

It should be understood that a related signal exchange process, for example, sending first information, may be a process of outputting the first information from the processor. Specifically, a signal output by the processor may be output to the transmitter, and an input signal received by the processor may be from the receiver. The transmitter and the receiver may be collectively referred to as a transceiver.

The processing apparatus in the twenty-third aspect may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

According to a twenty-fourth aspect, a computer program product is provided. The computer program product includes: a computer program (which may also be referred to as code or instructions). When the computer program is run, a computer is enabled to perform the method provided in any one of the first aspect to the nineteenth aspect, or perform the method in any one of the possible implementations of the first aspect to the nineteenth aspect.

According to a twenty-fifth aspect, a computer-readable medium is provided. The computer-readable medium stores a computer program (which may also be referred to as code or instructions). When the computer program is run on a computer, the computer is enabled to perform the method provided in any one of the first aspect to the nineteenth aspect, or perform the method in any one of the possible implementations of the first aspect to the nineteenth aspect.

### BRIEF DESCRIPTION OF DRAWINGS

FIG. 1 is a schematic diagram of an architecture of a system that may be applied to this application;
FIG. 2 is a schematic flowchart of a method for establishing an indirect communication path;
FIG. 3 is a schematic flowchart of a multipath transmission method according to this application;
FIG. 4 is a schematic flowchart of a multipath transmission method according to this application;
FIG. 5 is a schematic flowchart of a multipath transmission method according to this application;
FIG. 6 is a schematic flowchart of a multipath transmission method according to this application;
FIG. 7 is a schematic flowchart of a multipath transmission method according to this application;
FIG. 8 is a schematic flowchart of another multipath transmission method according to this application;
FIG. 9 is a schematic flowchart of a multipath transmission method according to this application;
FIG. 10 is a schematic flowchart of a multipath transmission method according to this application;
FIG. 11 is a schematic flowchart of a multipath transmission method according to this application;
FIG. 12 is a schematic flowchart of a multipath transmission method according to this application;
FIG. 13 is a schematic flowchart of a multipath transmission method according to this application;
FIG. 14 is a schematic block diagram of a communication apparatus according to this application;
FIG. 15 is a schematic diagram of a structure of another communication apparatus according to this application; and
FIG. 16 is a schematic diagram of a structure of a terminal according to this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a new radio (new radio, NR) system.

In the communication field, terminals may perform communication through a cellular communication interface, namely, a user equipment (user equipment, UE)-universal mobile terrestrial radio access network (UE-UTRAN, Uu) interface. Alternatively, communication between terminals may be directly performed through a directly connected communication interface, namely, a proximity-based service communication (interface) 5 (proximity-based service communication (interface) 5, PC5) interface. The PC5 interface is a reference point between two terminals, and may be configured to complete signaling and data transmission between a control plane and a user plane, proximity-based services (proximity-based services, ProSe) discovery, direct communication, or the like. The PC5 interface may be for short-distance direct communication or direct communication between terminals, and this type of communication may be referred to as PC5 communication or PC5 interface communication for short. Terminals that communicate through the PC5 interface may be located within coverage of a network, or may be located outside the coverage of the network. The network may be a 4G network or a 5G network. This is not specifically limited in embodiments of this application. In addition, a direct communication link between two terminals that communicate through the PC5 interface is defined as a sidelink (sidelink, SL), and the sidelink may also be referred to as a side chain, a PC5 link, or a PC5 connection.

When a terminal is out of coverage of a network or communication quality between the terminal and a radio access network (radio access network, RAN) is poor, an indirect communication manner may be used. To be specific, relay communication is implemented by using a communication architecture including a PC5 interface and a Uu interface. Specifically, uplink data of the terminal (referred to as a remote terminal or remote UE) may be transmitted to a relay terminal (which may also be referred to as relay UE) through a PC5 interface, and then the relay terminal sends the uplink data of the remote terminal to the network through a Uu interface between the relay terminal and a network device. Alternatively, the network may first send downlink data of a remote terminal to a relay terminal through a Uu interface between the relay terminal and a network device, and then the relay terminal transmits the downlink data to the remote terminal through a PC5 interface between the relay terminal and the remote terminal.

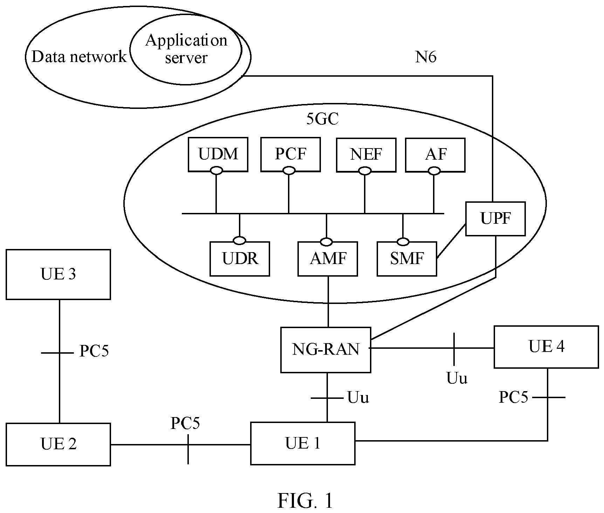

FIG. 1 is a schematic diagram of an architecture of a system that may be applied to this application. As shown in FIG. 1, the system architecture may include the following network elements:
1. Terminal, such as UE 1 to UE 4 in FIG. 1.
   The terminal may be user equipment (user equipment, UE), an access terminal, a terminal in V2X communication, a subscriber unit, a subscriber station, a mobile station, a remote station, a remote terminal, a mobile device, a user terminal, a terminal device, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an on board device, a wearable device, a terminal in a 5G network, a terminal in a future evolved public land mobile network (public land mobile network, PLMN), or the like. This is not limited in embodiments of this application. The terminal may further include a V2X device, for example, a vehicle or an on board unit (on board unit, OBU) in a vehicle.
2. Radio access network (radio access network, RAN) node: A module, an apparatus, a device, or the like that implements an access network function based on a wireless communication technology may be referred to as a RAN node. The RAN node is mainly configured to provide an interface for UE to access a mobile network in a wireless manner, manage a radio resource, and provide an access service for the UE. In this way, a control signal and user data are forwarded between the UE and a core network.
   The RAN node may be a base station (for example, a gNodeB (gNodeB, gNB) in a 5G mobile communication system), a base station in a future mobile communication system, an access node or the like in a wireless fidelity (Wireless Fidelity, Wi-Fi) system, or may be a radio controller in a cloud radio access network (Cloud Radio Access Network, CRAN) scenario. Alternatively, the access network node may be a relay station, an access point, an on board device, a wearable device, or the like. A specific technology used by the access network node and a specific device form are not limited in embodiments of this application.
3. Access and mobility management function (access and mobility management function, AMF): The access and mobility management function is mainly for mobility management, access management, or the like. Specifically, the AMF may be configured to implement another function of a mobility management entity (mobility management entity, MME) that is different from session management, for example, lawful interception or access authorization (or authentication). A module, an apparatus, a device, or the like that can implement a function of the AMF may be referred to as an AMF node.
4. Session management function (session management function, SMF): The session management function is mainly for session management, an internet protocol (internet protocol, IP) address assignment and management of UE, selection of a manageable user plane function, policy control, a termination point of a charging functional interface, downlink data notification, configuration of routing information for a user plane function, or the like. A module, an apparatus, a device, or the like that can implement a function of the SMF may be referred to as an SMF node.
5. Policy control function (policy control function, PCF): The policy control function is a unified policy framework for guiding network behavior, and provides policy rule information or the like for a control plane function network element (for example, an AMF or SMF network element). A module, an apparatus, a device, or the like that can implement a function of the PCF may be referred to as a PCF node.
6. Unified data management (unified data management, UDM): The unified data management is for user identifier processing, access authentication, registration, mobility management, or the like.
7. User plane function (user plane function, UPF): The user plane function is for packet routing and forwarding, or quality of service (quality of service, QoS) processing of user plane data, or the like. The UPF is specifically divided into an intermediate-UPF (intermediate-UPF, I-UPF) and an anchor-UPF (anchor-UPF, A-UPF). The I-UPF is connected to a RAN. The A-UPF is a UPF of a session anchor, and the A-UPF may also be referred to as a PDU session anchor (PDU session anchor, PSA). A module, an apparatus, a device, or the like that can implement a function of the UPF may be referred to as a UPF node.
8. Application function (application function, AF): The application function mainly supports interaction with a 3rd generation partnership project (3rd generation partnership project, 3GPP) core network to provide a service, for example, affecting a data routing decision, a policy control function, or providing some third-party services for a network side. It may be understood that a third-party server, for example, an application server in the Internet, provides related service information, including providing quality of service requirement information corresponding to a service for a PCF, and sending user plane data information of a service to a PSA-UPF. The AF may alternatively be a content provider (content provider, CP). For example, an application server (application server, AS) is an AF.
9. A network exposure function (network exposure function, NEF) connects a core network element and an external application server, and provides services such as authentication and data forwarding when the external application server initiates a service request to a core network.
10. Data network (data network, DN): The data network is a network for providing data transmission, for example, an Internet network.
11. Unified data repository (unified data repository, UDR): The unified data repository is configured to provide storage and retrieval for a PCF policy, that is, storage and retrieval of open structured data, storage of user information requested by an application function, and the like.

A terminal (for example, UE 1 or UE 4) accesses a 5G network through a radio air interface and obtains a service. The terminal interacts with a RAN node through the air interface, and interacts with an AMF node by using a non-access stratum (non-access stratum, NAS) message. A UPF node is responsible for forwarding and receiving user data in the terminal. A transmission resource and a scheduling function that are of the UPF node and that serve the terminal are managed and controlled by an SMF node. The AMF node is mainly responsible for signaling processing, for example, functions such as access control, mobility management, attachment and detachment, and gateway selection. In addition, when providing a service for a session of the terminal, the AMF node may further provide a storage resource of a control plane for the session, to store a session identifier, an SMF network element identifier associated with the session identifier, and the like. The SMF node is responsible for user plane node selection, user plane node redirection, internet protocol (internet protocol, IP) address assignment, bearer establishment, modification, and release, and quality of service (quality of service, QoS) control. When a remote terminal (for example, the UE 2 in FIG. 1) is out of coverage of a network or signal quality between the remote terminal and a RAN node is poor (for example, lower than a preset threshold), the remote terminal may be assisted by a relay terminal. For example, in FIG. 1, the UE 2 may be assisted by the UE 1. Communication between the remote terminal and the RAN node is implemented through communication between the remote terminal and the relay terminal and communication between the relay terminal and the RAN node.

To improve data transmission reliability of a terminal, two end-to-end network layer transmission channels may be established between the terminal and a server. To be specific, the terminal establishes a connection to the server by using the two network layer transmission channels. For downlink data transmission, the server transmits same data by using the two end-to-end network layer transmission channels. After receiving the data, the terminal performs data deduplication.

However, in the foregoing solution, both the terminal and the server need to support a multipath transmission control protocol (multipath transmission control protocol, MPTCP) function. If the terminal or the server does not support the MPTCP function, the transmission reliability of the terminal cannot be improved by establishing two end-to-end network layer transmission channels. Therefore, how to improve the data transmission reliability of the terminal without considering whether the terminal and the server support the MPTCP function is a problem that needs to be resolved.

In view of this, this application provides a multipath transmission method, to resolve a problem of data transmission reliability of a terminal when the terminal and a server do not support an MPTCP function.

This application first provides a multipath transmission method. Two communication paths are established, and a user plane function node replicates, to another communication path for transmission, data transmitted on a communication path that is first established. In this way, reliability of the data transmitted on the communication path that is first established can be improved.

In a first manner, one of the two communication paths is a direct communication path, and the other is an indirect communication path.

In a second manner, both the two communication paths are indirect communication paths.

The direct communication path may be a session of (established by) a remote terminal, and the indirect communication path may include a session of (established by) a relay terminal and a sidelink between the relay terminal and the remote terminal.

The session may be a PDU session.

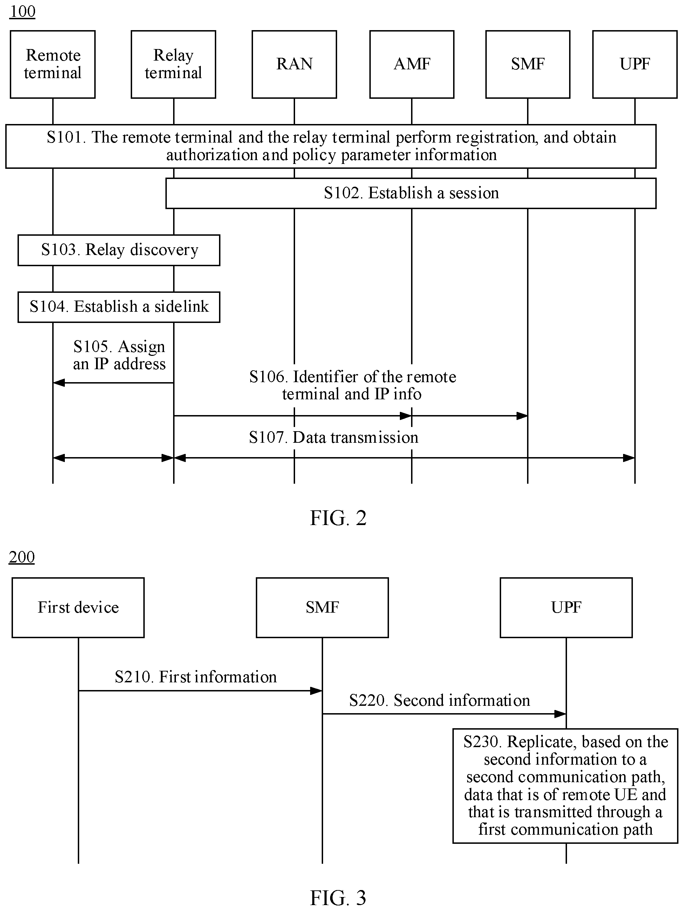

For ease of understanding of this application, how to establish the indirect communication path is first described with reference to FIG. 2. For a process of establishing the direct communication path (in other words, establishing the session) by the remote terminal, refer to the conventional technology.

It should be understood that a RAN, a UPF, an SMF, a PCF, an AF, and an AS below may respectively correspond to an access network node, a user plane function node, a session management function node, a policy control function node, an application function node, and an application server.

FIG. 2 is a schematic flowchart of a method for establishing an indirect communication path. In the method 100 shown in FIG. 2, only how to establish the indirect communication path is briefly described. For specific details, refer to a conventional technology.

S101. A remote terminal and a relay terminal separately register with a network, and obtain authorization and policy parameter information.

The authorization and policy parameter information is for discovery and selection of the relay terminal and PC5 communication between the remote terminal and the relay terminal.

S102. The relay terminal establishes a session. After the session is established, an SMF assigns, to the relay terminal, an IP address corresponding to the session, and data may be transmitted between the relay terminal and a UPF based on the IP address.

S103. In a relay discovery procedure, the relay terminal and the remote terminal discover each other.

S104. The remote terminal establishes a sidelink with the relay terminal. In other words, the remote terminal establishes a PC5 communication link with the relay terminal.

If the session established by the relay terminal cannot meet a session requirement of the remote terminal, the relay terminal establishes a new session for the remote terminal, where the session serves only the relay terminal, and the SMF assigns an IP address corresponding to the session to the relay terminal.

S105. The relay terminal assigns, to the remote terminal, an IP address for communication through the sidelink. In other words, the relay terminal assigns, to the remote terminal, an IP address for PC5 communication.

S106. The relay terminal reports an identifier of the remote terminal and IP info to an AMF and the SMF, where the IP info is an address that is assigned by the relay terminal to the remote terminal and that is for network side communication.

For example, the relay terminal may report the identifier of the remote terminal and the IP info by using a session modification request message or a remote terminal report (Remote UE Report) message.

For example, if a type of the session established by the relay terminal is IPv4, the IP address assigned by the SMF to the relay terminal is IPv4 (for example, IP1), and the IP info assigned by the relay terminal to the remote terminal is a specific port number (for example, Port1), where the specific port number may be a port number range. The SMF learns that the relay terminal is to transmit data of the remote terminal based on the IPv4 address and the specific port number (for example, IP1 and Port1).

If a type of the session established by the relay terminal is IPv6, the IP address assigned by the SMF to the relay terminal is an IPv6 prefix (IPv6 prefix), and the IP info assigned by the relay terminal to the remote terminal is a longer IPv6 prefix. The SMF learns that the relay terminal is to transmit data of the remote terminal based on the longer IPv6 prefix. For example, the IPv6 prefix of the IP address assigned by the SMF to the relay terminal is 64 bits, and the IPv6 prefix of the IP address assigned by the relay terminal to the remote terminal is 96 bits.

S107. The relay terminal forwards uplink and downlink data of the remote terminal based on the IP address.

When the type of the session established by the relay terminal is IPv4, it is assumed that an IP address used by the remote terminal on the sidelink established by the remote terminal and the relay terminal is IP3, the IP address corresponding to the session of the relay terminal is IP1, and the IP info assigned by the relay terminal to the remote terminal is Port1, the relay terminal transmits the data of the remote terminal based on IP1 and Port1 (denoted as IP1-1). The relay terminal needs to bind an association relationship between IP3 and IP1-1, to perform network address translation (Network Address Translation, NAT). In a downlink direction, a server transmits data to the remote terminal based on IP1-1. After receiving an IP1-1 data packet from the UPF, the relay terminal learns that the data packet is of the remote terminal, and then modifies an IP address of the data packet to IP3. The data packet with the modified IP address is sent to the remote terminal through the sidelink established between the remote terminal and the relay terminal. In an uplink direction, the remote terminal transmits data to the server based on IP3. After receiving an IP3 data packet, the relay terminal modifies an IP address of the data packet to IP1-1, and then sends the data packet with the modified IP address to the UPF by using the session of the relay terminal, to send the data packet to the server.

When the type of the session established by the relay terminal is IPv6, it is assumed that an IP address corresponding to the session is IP1 (IPv6 prefix), the IP info assigned by the relay terminal to the remote terminal is IP1-1 (which may be considered as an entire IPv6 address), and an IP address used by the remote terminal on the sidelink established between the remote terminal and the relay terminal is IP1-1, the relay terminal transmits the data of the remote terminal based on IP1-1. The relay terminal needs to bind an association relationship between the sidelink between the remote terminal and the relay terminal and IP1-1. In a downlink direction, a server transmits data to the remote terminal based on IP1-1. After receiving an IP1-1 data packet from the UPF, the relay terminal learns that the data is of the remote terminal, and then sends the data packet to the remote terminal through the sidelink established between the remote terminal and the relay terminal. In an uplink direction, the remote terminal transmits data to the server based on IP1-1. After receiving an IP1-1 data packet, the relay terminal sends the data packet to the UPF by using a PDU session, and then sends the data packet to the server.

The following describes the multipath transmission method provided in this application with reference to the accompanying drawings.

It should be noted that, in methods 200 to 900 described below, a communication path that is first established is a first communication path, and a communication path that is subsequently established is a second communication path. In some embodiments, the first communication path is a direct communication path, and the second communication path is an indirect communication path. In some embodiments, the first communication path is an indirect communication path, and the second communication path is a direct communication path. In some other embodiments, both the first communication path and the second communication path are indirect communication paths.

FIG. 3 is a schematic flowchart of a multipath transmission method according to this application. The method 200 is described below. It should be understood that the method 200 is performed on a premise that a first communication path and a second communication path have been established. For how to establish the first communication path and the second communication path in this specification, refer to a conventional technology or the foregoing description. Details are not described in this application.

S210. An SMF receives first information from a first device.

Correspondingly, the first device sends the first information to the SMF.

The first device may be a remote terminal, a relay terminal, or a PCF

The first information may be for replicating, to the second communication path, data that is of a remote terminal and that is transmitted through the first communication path.

In an example, the first communication path is a first session of the remote terminal, and the second communication path includes: a second session of a relay terminal corresponding to the remote terminal and a sidelink between the relay terminal and the remote terminal.

In another example, the first communication path includes: a second session of a relay terminal corresponding to the remote terminal and a sidelink between the relay terminal and the remote terminal, and the second communication path is a first session of the remote terminal.

Optionally, the second session is a specific session established by the relay terminal for the remote terminal. To be specific, the second session is only for transmitting the data of the remote terminal, and cannot transmit data of another remote terminal. In addition, the second session may alternatively be a session shared by a plurality of remote terminals. To be specific, in addition to transmitting the data of the remote terminal, the second session may be further for transmitting data of another remote terminal.

It should be understood that the SMF is an SMF corresponding to the first communication path. For example, if the first communication path is the first session, the SMF is an SMF selected by an AMF when the first session is established. The SMF is responsible for session management of the first session. To be specific, the SMF corresponds to the first session. For another example, if the first communication path includes the second session of the relay terminal corresponding to the remote terminal and the sidelink between the relay terminal and the remote terminal, the SMF is an SMF selected by an AMF when the second session is established. The SMF is responsible for session management of the second session. To be specific, the SMF corresponds to the second session.

S220. The SMF sends second information to a UPF based on the first information.

Correspondingly, the UPF receives the second information from the SMF.

The second information may be used by the UPF to replicate, to the second communication path, the data that is of the remote terminal and that is transmitted through the first communication path.

In an example, the second information is the same as the first information.

In another example, the second information is generated based on the first information.

The first information and the second information are described in detail below with reference to specific embodiments, and are not described herein.

It should be understood that the UPF is a UPF corresponding to the first communication path. For example, if the first communication path is the first session, the UPF is a UPF selected by the SMF when the first session is established. The UPF is a user plane network element of the first session. To be specific, the UPF corresponds to the first session. For another example, if the first communication path includes the second session of the relay terminal corresponding to the remote terminal and the sidelink between the relay terminal and the remote terminal, the UPF is a UPF selected by the SMF when the second session is established. The UPF is a user plane network element of the second session. To be specific, the UPF corresponds to the second session.

S230. The UPF replicates, based on the second information to the second communication path, the data that is of the remote terminal and that is transmitted through the first communication path.

It should be noted that, S230 may be replaced with: The UPF separately sends (or transmits), based on the second information, the data of the remote terminal through the first communication path and the second communication path.

S230 may be understood as follows: After receiving the second information, if the UPF receives the data of the remote terminal, the UPF separately transmits the data of the remote terminal through the first communication path and the second communication path.

The data of the remote terminal is service data of the remote terminal, namely, a payload (payload) in a data packet that is for the remote terminal and that is received by the UPF.

In an optional implementation, after receiving the second information, if the UPF receives the data packet that is for the remote terminal, the UPF may make a replication of the data packet, and then replace a header in a data packet obtained through replication with a header corresponding to the second communication path. In this way, the UPF can transmit the received data packet through the first communication path, and transmit, through the second communication path, the data packet obtained after the header is replaced. Finally, the remote terminal may obtain two data packets. The two data packets have a same payload but different headers. The header corresponding to the second communication path may be understood as an address used by a session on the second communication path.

In another optional implementation, after receiving the second information, if the UPF receives the data packet that is for the remote terminal, the UPF may make a replication of the payload of the data packet, and then add a header corresponding to the second communication path to the payload obtained through replication. In this way, the UPF can transmit the received data packet through the first communication path, and transmit, through the second communication path, the data packet obtained after the header is added to the payload obtained through replication. Finally, the remote terminal may obtain two data packets. The two data packets have a same payload but different headers. The header corresponding to the second communication path may be understood as an address used by a session on the second communication path.

In conclusion, according to the multipath transmission method provided in this application, the UPF may transmit, based on a request of the SMF, the data of the remote terminal through two communication paths: a direct communication path and an indirect communication path, to improve reliability of the data of the remote terminal.

The following describes various embodiments in detail with reference to the accompanying drawings. Before specific embodiments are described, two concepts involved in the methods 300 to 600 are first described in a unified manner.

### (1) A first address is an address corresponding to a first session.

The first address is an IP address that corresponds to the first session and that is assigned by an SMF to a remote terminal after the first session is established.

### (2) A second address is an address for transmitting data of the remote terminal by using a second session.

For example, if a type of the second session is IPv4, the second address is information including an IP address (for example, IP1) assigned by the SMF to a relay terminal and IP info (namely, a specific port number, for example, Port1) that is assigned by the relay terminal to the remote terminal and that is for network side communication. If a type of the second session is IPv6, the second address is IP info.

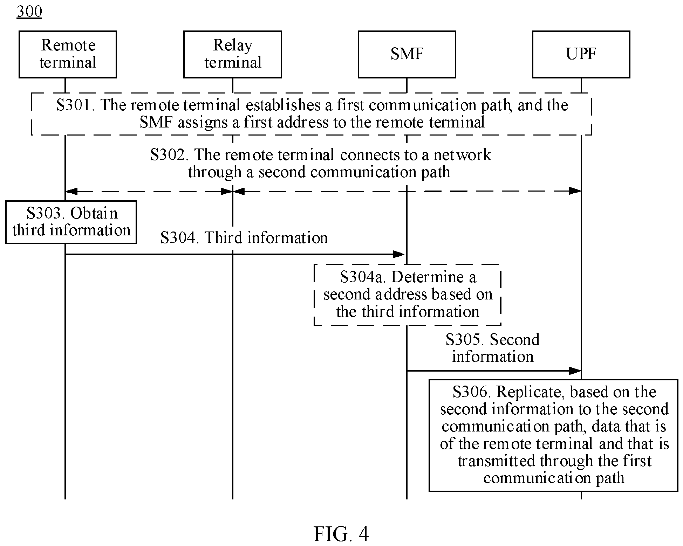

FIG. 4 is a schematic flowchart of another multipath transmission method according to this application. The method 300 shown in FIG. 4 is described by using an example in which a first device is a remote terminal, a first communication path is a first session of the remote terminal, and a second communication path includes: a second session of a relay terminal corresponding to the remote terminal and a sidelink between the relay terminal and the remote terminal.

S301. A remote terminal establishes a first session (namely, a first communication path), and an SMF assigns a first address to the remote terminal.

Then, the remote terminal may communicate with an application server (application server, AS) based on the first address.

It should be understood that the SMF is an SMF selected by an AMF when the first session is established. To be specific, the SMF corresponds to the first session.

S302. The remote terminal connects to a network through a second communication path.

Specifically, a sidelink is established between the remote terminal and a relay terminal, and the relay terminal establishes a second session. For this process, refer to the method 100. In this process, the SMF may learn of a second address, and may store a correspondence between the second address and an identifier of the second session.

After the first communication path and the second communication path are established, a UPF may transmit data of the remote terminal through the first communication path and the second communication path in the following steps.

It should be noted that S301 and S302 are optional steps. During specific implementation, if the first communication path and the second communication path have been established, S301 and S302 do not need to be performed.

S303. The remote terminal obtains third information.

It should be noted that the third information herein is an example of the first information in the method 200. To be specific, a possible implementation of the first information in the method 200 is the third information in the method 300.

The third information is for replicating, to the second communication path, the data that is of the remote terminal and that is transmitted through the first communication path.

For different second sessions, the first information may be different. Details are as follows:
Case 1: The second session is a specific session established by the relay terminal for the remote terminal.

Further, the third information may include the identifier of the second session and an identifier of the relay terminal.

It should be understood that, in a process of establishing the sidelink between the remote terminal and the relay terminal, the remote terminal may obtain the identifier of the relay terminal.

In addition, in a process of establishing the second session by the relay terminal or after establishing the second session, the relay terminal may send the identifier of the second session to the remote terminal, so that the remote terminal can obtain the identifier of the second session.

Case 2: The second session is a session shared by a plurality of remote terminals.

Further, the third information may include the second address.

It should be understood that if a type of the second session is IPv6, after the sidelink is established between the remote terminal and the relay terminal, the relay terminal assigns the second address to the remote terminal, so that the remote terminal can obtain the second address. If a type of the second session is IPv4, the relay terminal may learn of the second address based on IP info that is assigned by the relay terminal to the remote terminal and that is for network side communication and an IP address assigned by the SMF to the relay terminal, and the relay terminal may send the second address to the remote terminal, so that the remote terminal can obtain the second address.

Optionally, the third information further includes replication indication information, where the replication indication information indicates to replicate, to the second communication path, the data that is of the remote terminal and that is transmitted through the first communication path. For example, the replication indication information may be one bit (bit). This is not limited in this application.

Optionally, the remote terminal obtains the third information from the relay terminal by using a PC5-S (PC5-Signaling) message.

S304. The remote terminal sends the third information to the SMF (an example of a second device).

Correspondingly, the SMF receives the third information from the remote terminal.

Optionally, the remote terminal may send the third information to the SMF via the AMF. The third information may be carried in a PDU session modification request message.

S305. The SMF sends second information to the UPF based on the third information.

It should be understood that the UPF is a UPF selected by the SMF when the first session is established. To be specific, the UPF corresponds to the first session.

The second information may include the second address.

Optionally, the second information may be carried in an N4 session modification request message.

Corresponding to the case 1 in S303, before S305, the method may further include the following step:
S304a. The SMF determines the second address based on the third information.

Specifically, as described above, the SMF may store the correspondence between the identifier of the second session and the second address. Therefore, after receiving the third information, the SMF may determine the second address based on the identifier of the second session.

Corresponding to the case 2 in S303, the second information may be the same as the third information.

Optionally, the second information may further include the replication indication information.

S306. The UPF replicates, based on the second information to the second communication path, the data that is of the remote terminal and that is transmitted through the first communication path.

To be specific, the UPF replicates, based on the second information, a data packet carried in a first PDU session as a data packet encapsulated by the second address.

Optionally, before S306, the method may further include: The UPF receives a fifth data packet of the remote terminal, where the fifth data packet includes third data of the remote terminal and an address corresponding to the first session.

S306 may specifically include: The UPF sends the fifth data packet by using the first session, and sends a sixth data packet by using the second session, where the sixth data packet includes the second address and the third data.

For a manner of obtaining the sixth data packet, refer to the description of S230 in the method 200. For example, in a manner, after receiving the fifth data packet, the UPF may make a replication of the fifth data packet, and then replace an address (namely, the first address) corresponding to the first session in the data packet obtained through replication with the second address, to obtain the sixth data packet. In another manner, after receiving the fifth data packet, the UPF may make a replication of a payload (namely, the third data) in the fifth data packet, and then add the second address to the payload obtained through replication, to obtain the sixth data packet.

According to the method provided in this application, the remote terminal may request a core network to transmit data that is on a first established direct communication path through two communication paths: the direct communication path and an indirect communication path. Therefore, the UPF in the core network may transmit, based on the request of the remote terminal, the data in the direct communication path through the two communication paths, to improve reliability of the data of the remote terminal.

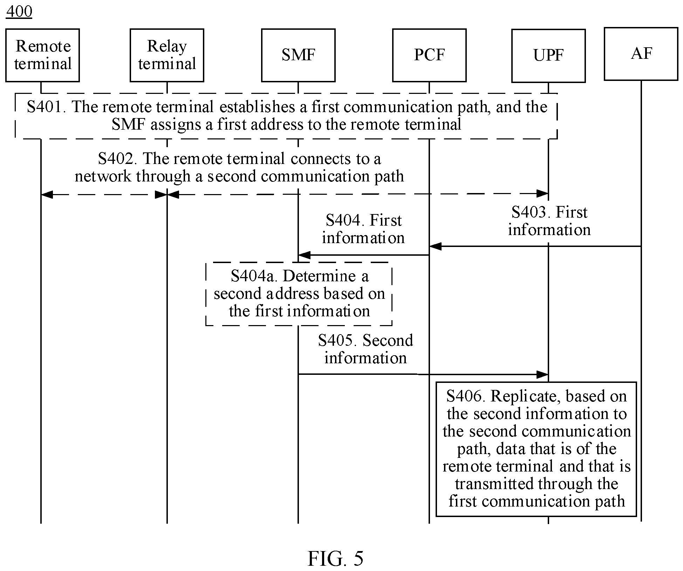

FIG. 5 is a schematic flowchart of another multipath transmission method according to this application. The method 400 shown in FIG. 5 is described by using an example in which a first device is a PCF, a first communication path is a first session of a remote terminal, and a second communication path includes: a second session of a relay terminal corresponding to the remote terminal and a sidelink between the relay terminal and the remote terminal.

S401 and S402 are the same as S301 and S302. For details, refer to S301 and S302.

It should be noted that S401 and S402 are optional steps. During specific implementation, if the first communication path and the second communication path have been established, S401 and S402 do not need to be performed.

S403. An AF sends first information to a PCF.

Correspondingly, the PCF receives the first information from the AF.

It should be understood that the PCF is a PCF selected by the SMF when the first session is established. The PCF is responsible for a session policy of the first session. To be specific, the PCF corresponds to the first session.

Optionally, the AF may send the first information to the PCF via an NEF.

Optionally, the first information is carried in a policy authorization creation or update request message initiated by the AF.

For different second sessions, the first information may be different. Details are as follows:
Case 1: The second session is a specific session established by the relay terminal for the remote terminal.

Further, the first information may include the identifier of the second session and an identifier of the relay terminal.

It should be understood that, in a process in which the relay terminal establishes the second session, the PCF may obtain the identifier of the second session and the identifier of the relay terminal via the SMF.

Case 2: The second session is a session shared by a plurality of remote terminals.

Further, the first information may include the second address.

If a type of the second session is IPv6, after the sidelink is established between the remote terminal and the relay terminal, the relay terminal assigns the second address to the remote terminal, so that the relay terminal can determine the second address. Then, the relay terminal may send the second address to the PCF, so that the PCF can obtain the second address.

If a type of the second session is IPv4, the relay terminal may learn of the second address based on IP info that is assigned by the relay terminal to the remote terminal and that is for network side communication and an IP address assigned by the SMF to the relay terminal. Then, the relay terminal may send the second address to the PCF, so that the PCF can obtain the second address.

Optionally, the first information further includes replication indication information, where the replication indication information indicates to replicate, to the second communication path, the data that is of the remote terminal and that is transmitted through the first communication path. For example, the replication indication information may be one bit (bit). This is not limited in this application.

S404. The PCF sends the first information to the SMF (an example of a second device).

Correspondingly, the SMF receives the first information from the PCF.

It should be understood that the SMF is an SMF selected by an AMF when the first session is established. To be specific, the SMF corresponds to the first session.

Optionally, the first information is carried in a session management policy association modification message.

S405. The SMF sends second information to the UPF based on the first information.

It should be understood that the UPF is a UPF selected by the SMF when the first session is established. To be specific, the UPF corresponds to the first session.

The second information may include the second address.

Optionally, the second information may be carried in an N4 session modification request message.

Corresponding to the case 1 in S403, before S405, the method may further include the following step:
S404a. The SMF determines the second address based on the first information.

Specifically, as described above, the SMF stores the correspondence between the identifier of the second session and the second address. Therefore, after receiving the first information, the SMF may determine the second address based on the identifier of the second session in the SMF.

Optionally, the second information further includes the replication indication information.

S406. The UPF replicates, based on the second information to the second communication path, the data that is of the remote terminal and that is transmitted through the first communication path.

S406 is the same as S306. For details, refer to S306.

According to the method provided in this application, the AF may request, via the PCF, the UPF to transmit data that is on a first established direct communication path through two communication paths: the direct communication path and an indirect communication path. Therefore, the UPF may transmit, based on the request of the PCF, the data in the direct communication path through the two communication paths, to improve reliability of the data of the remote terminal.

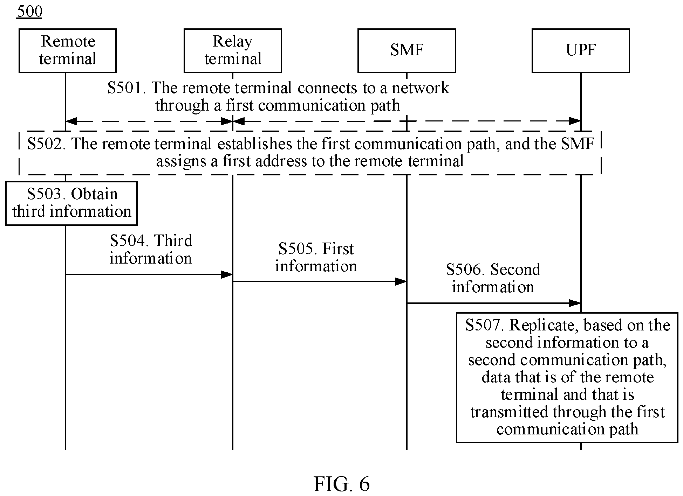

FIG. 6 is a schematic flowchart of another multipath transmission method according to this application. The method 500 shown in FIG. 6 is described by using an example in which a first device is a relay terminal, a first communication path includes: a second session of the relay terminal corresponding to a remote terminal and a sidelink between the relay terminal and the remote terminal, and a second communication path is a first session of the remote terminal.

S501. A remote terminal connects to a network through a first communication path.

This step is similar to S302. For details, refer to S302.

Then, the remote terminal may communicate with an AS based on a second address.

S502. The remote terminal establishes a first session, and an SMF assigns a first address to the remote terminal.

After the first communication path and a second communication path are established, a UPF may transmit data of the remote terminal through the first communication path and the second communication path in the following steps.

It should be understood that the SMF is an SMF selected by an AMF when the first session is established. To be specific, the SMF corresponds to the first session.

It should be noted that S501 and S502 are optional steps. During specific implementation, if the first communication path and the second communication path have been established, S501 and S502 do not need to be performed.

S503. The remote terminal obtains third information.

The third information is for replicating, to the second communication path, the data that is of the remote terminal and that is transmitted through the first communication path.

It should be noted that the third information herein is an example of the first information in the method 200.

For different second sessions, the third information may be different. Details are as follows:
Case 1: The second session is a specific session established by the relay terminal for the remote terminal.

Further, the third information may include: an identifier of the first session or the first address.

Case 2: The second session is a session shared by a plurality of remote terminals.

Further, the third information may include: an identifier of the first session or the first address.

It should be understood that, in a process of establishing the first session, the remote terminal may obtain the identifier of the first session. After establishing the first session, the SMF may assign, to the remote terminal, the first address corresponding to the first session.

Optionally, the third information further includes replication indication information, where the replication indication information indicates to replicate, to the second communication path, the data that is of the remote terminal and that is transmitted through the first communication path. For example, the replication indication information may be one bit (bit). This is not limited in this application.

S504. The remote terminal sends the third information to the relay terminal (an example of a second device).

Correspondingly, the relay terminal receives the third information from the remote terminal.

Optionally, the third information may be carried in a PC5-S (PC5-Signaling) message.

S505. The relay terminal sends first information to the SMF based on the third information.

Correspondingly, the SMF receives the first information from the relay terminal.

It should be understood that the SMF is an SMF selected by the AMF when the second session is established. To be specific, the SMF corresponds to the second session.

Corresponding to the case 1 in S503, the first information may include the identifier of the first session and an identifier of the remote terminal, or the first information may include the first address.

Specifically, if the third information includes the identifier of the first session, the first information may include the identifier of the first session and the identifier of the remote terminal. If the third information includes the first address, the first information may include the first address. To be specific, in this case, the first information is the same as the third information.

Corresponding to the case 2 in S503, the first information may include: the identifier of the first session, an identifier of the remote terminal, and the second address. Alternatively, the first information may include: the first address and the second address.

Specifically, if the third information includes the identifier of the first session, the first information may include the identifier of the first session, the identifier of the remote terminal, and the second address. If the third information includes the first address, the first information may include the first address. To be specific, in this case, the first information is the same as the third information.

It should be understood that, after receiving the third information, the relay terminal may obtain, based on the identifier of the remote terminal, an address that is stored by the relay terminal and that is for transmitting the data of the remote terminal, namely, the second address.

Optionally, the relay terminal sends the first information to the SMF via the AMF. The first information may be carried in a PDU session modification request message.

S506. The SMF sends second information to the UPF based on the first information.

It should be understood that the UPF is a UPF selected by the SMF when the second session is established. To be specific, the UPF corresponds to the second session.

Corresponding to the case 1 in S505 and S503, the second information may include the first address.

If the first information includes the identifier of the first session and the identifier of the remote terminal, the SMF first determines the first address before S506. The SMF stores a correspondence between the identifier of the first session and the first address. Therefore, the SMF may determine the first address based on the received identifier of the first session and the received identifier of the remote terminal.

Corresponding to the case 2 in S505 and S503, the second information may include the first address and the second address.

The first information includes the identifier of the first session, the identifier of the remote terminal, and the second address. Before S506, the SMF may first determine the first address.

The SMF stores a correspondence between the identifier of the first session and the first address. Therefore, the SMF may determine the first address based on the received identifier of the first session and the received identifier of the remote terminal.

Optionally, the second information further includes the replication indication information.

Optionally, the second information is carried in an N4 session modification request message.

S507. The UPF replicates, based on the second information to the second communication path, the data that is of the remote terminal and that is transmitted through the first communication path.

To be specific, corresponding to the foregoing case 1, the UPF replicates, based on the second information, a data packet carried in a second PDU session as a data packet encapsulated by the first address.

Corresponding to the foregoing case 2, the UPF replicates, based on the second information, a data packet encapsulated by the second address, as a data packet encapsulated by the first address.

Optionally, corresponding to the foregoing case 1, before S507, the method may further include: The UPF receives a first data packet of the remote terminal, where the first data packet includes first data of the remote terminal and an address (namely, the second address) corresponding to the second session.

S507 may specifically include: The UPF sends the first data packet by using the second session, and sends a second data packet by using the first session, where the second data packet includes the first address and the first data.

For a manner of obtaining the second data packet, refer to the description of S230 in the method 200. For example, in a manner, after receiving the first data packet, the UPF may make a replication of the first data packet, and then replace the second address in the data packet obtained through replication with the first address, to obtain the second data packet. In another manner, after receiving the first data packet, the UPF may make a replication of a payload (namely, the first data) in the first data packet, and then add the first address to the payload obtained through replication, to obtain the second data packet.

Optionally, corresponding to the foregoing case 2, before S507, the method further includes: The UPF receives a third data packet of the remote terminal, where the third data packet includes second data of the remote terminal and the second address.

S507 may specifically include: The UPF sends the third data packet by using the second session, and sends a fourth data packet by using the first session, where the fourth data packet includes the first address and the second data.

For a manner of obtaining the fourth data packet, refer to the description of S230 in the method 200. For example, in a manner, after receiving the third data packet, the UPF may make a replication of the third data packet, and then replace the second address in the data packet obtained through replication with the first address, to obtain the fourth data packet. In another manner, after receiving the third data packet, the UPF may make a replication of a payload (namely, the second data) in the third data packet, and then add the first address to the payload obtained through replication, to obtain the fourth data packet.

According to the method provided in this application, the remote terminal may request, via the relay terminal and the SMF, the UPF to transmit data that is on a first established indirect communication path through two communication paths: a direct communication path and the indirect communication path. Therefore, the UPF may transmit, based on the request of the remote terminal, the data in the indirect communication path through the two communication paths, to improve reliability of the data of the remote terminal.

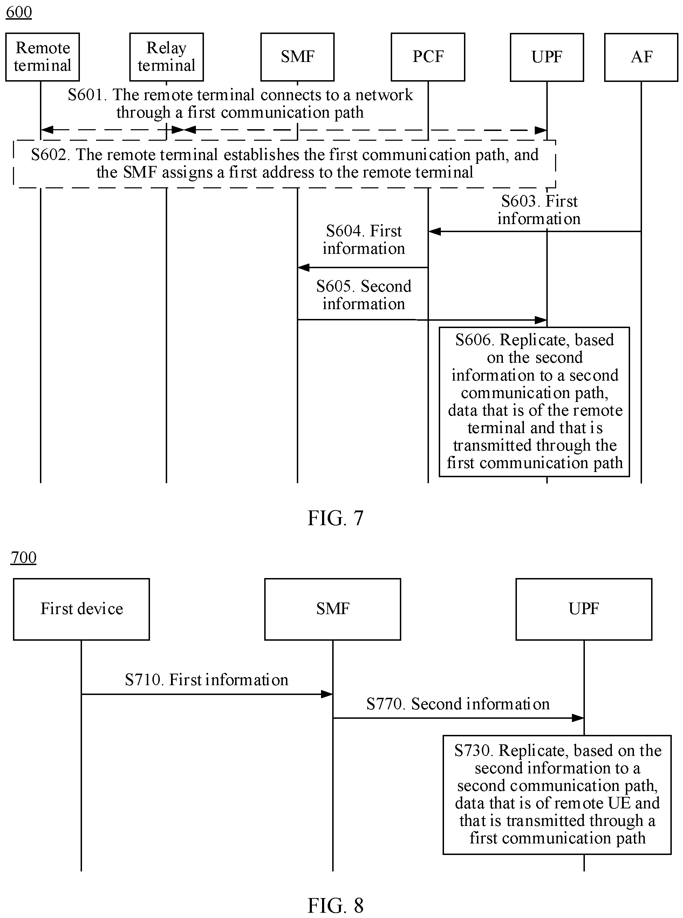

FIG. 7 is a schematic flowchart of another multipath transmission method according to this application. The method 600 shown in FIG. 7 is described by using an example in which a first device is a PCF, a first communication path includes: a second session of a relay terminal corresponding to a remote terminal and a sidelink between the relay terminal and the remote terminal, and a second communication path is a first session of the remote terminal.

S601 and S602 are the same as S501 and S502. For details, refer to S501 and S502.

It should be noted that S601 and S602 are optional steps. During specific implementation, if the first communication path and the second communication path have been established, S601 and S602 do not need to be performed.

S603. An AF sends first information to a PCF.

It should be understood that the PCF is a PCF selected by the SMF when a second session is established. The PCF is responsible for a session policy of the second session. To be specific, the PCF corresponds to the second session.

Optionally, the AF sends the first information to the PCF via an NEF.

Optionally, the first information is carried in a policy authorization creation or update request message initiated by the AF.

It should be noted that the first information herein is an example of the first information in the method 200.

For different second sessions, the first information may be different. Details are as follows:
Case 1: The second session is a specific session established by a relay terminal for the remote terminal.

Further, the first information may include an identifier of the first session and an identifier of the remote terminal; or the first information may include the first address.

It should be understood that after the first session is established, the AF may obtain the identifier of the remote terminal and the identifier of the first session, or the first address from the remote terminal.

Case 2: The second session is a session shared by a plurality of remote terminals.

Further, the first information may include an identifier of the first session, an identifier of the remote terminal, and the second address; or the first information may include the first address and the second address.

It should be understood that if a type of the second session is IPv6, after a sidelink is established between the remote terminal and the relay terminal, the relay terminal assigns the second address to the remote terminal, and the remote terminal obtains the second address from the relay terminal, and sends the second address to the AF, so that the AF can obtain the second address. If a type of the second session is IPv4, the relay terminal may learn of the second address based on IP info that is assigned by the relay terminal to the remote terminal and that is for network side communication, and an IP address assigned by the SMF to the relay terminal, and the remote terminal obtains the second address from the relay terminal, and sends the second address to the AF, so that the AF can obtain the second address.

Optionally, the first information further includes replication indication information, where the replication indication information indicates to replicate, to the second communication path, the data that is of the remote terminal and that is transmitted through the first communication path. For example, the replication indication information may be one bit (bit). This is not limited in this application.

S604. The PCF sends the first information to the SMF.

Correspondingly, the SMF receives the first information from the PCF.

It should be understood that the SMF is an SMF selected by the AMF when the second session is established. To be specific, the SMF corresponds to the second session.

Optionally, the first information may be carried in a session management policy association modification message.

S605 and S606 are the same as S506 and S507. For details, refer to S506 and S507.

According to the method provided in this application, the AF may request a core network to transmit data that is on a first established indirect communication path through two communication paths: a direct communication path and the indirect communication path. Therefore, the UPF in the core network may transmit, based on the request of the AF, the data in the indirect communication path through the two communication paths, to improve reliability of the data of the remote terminal.

The foregoing describes a first multipath transmission method provided in this application with reference to FIG. 3 to FIG. 7. The following describes a second multipath transmission method provided in this application.

FIG. 8 is a schematic flowchart of still another multipath transmission method according to this application. The method 700 is described below. It should be understood that the method 700 is performed on a premise that a first communication path and a second communication path have been established. For how to establish the first communication path and the second communication path in this specification, refer to a conventional technology. Details are not described in this application.

S710. An SMF receives first information from a first device.

Correspondingly, the first device sends the first information to the SMF.

The first device may be a first relay terminal or a PCF.

The first information is for replicating, to a second communication path, data that is of a remote terminal and that is transmitted through a first communication path.

The first communication path may include a first sidelink between the first relay terminal and the remote terminal and a first session of the first relay terminal, and the second communication path may include a second sidelink between a second relay terminal and the remote terminal and a second session of the second relay terminal.

Optionally, the first session is a specific session established by the first relay terminal for the remote terminal. In addition, the first session may alternatively be a session shared by a plurality of remote terminals.

Similarly, the second session may be a specific session established by the second relay terminal for the remote terminal. In addition, the second session may alternatively be a session shared by a plurality of remote terminals.

It should be understood that the session may be a PDU session. For example, the first session is a first PDU session, and the second session is a second PDU session.

It should be further understood that both the first communication path and the second communication path may be referred to as an indirect communication path.

It should be understood that the SMF is an SMF corresponding to the first communication path. To be specific, the SMF is an SMF selected by an AMF when the first session is established. The SMF is responsible for session management of the first session, and the SMF corresponds to the first session.

S720. The SMF sends second information to a UPF based on the first information.

Correspondingly, the UPF receives the second information from the SMF.

The second information may be used by the UPF to replicate, to the second communication path, the data that is of the remote terminal and that is transmitted through the first communication path.

In an example, the second information is the same as the first information.

In another example, the second information is generated based on the first information.

The first information and the second information are described in detail below with reference to specific embodiments, and are not described herein.

It should be understood that the UPF is a UPF corresponding to the first communication path. To be specific, the UPF is a UPF selected by the SMF when the first session is established. The UPF is a user plane network element of the first session, and the UPF corresponds to the first session.

S730. The UPF replicates, based on the second information to the second communication path, the data that is of the remote terminal and that is transmitted through the first communication path.

It should be noted that, S730 may be replaced with: The UPF separately sends (or transmits), based on the second information, the data of the remote terminal through the first communication path and the second communication path.

S730 may be understood as follows: After receiving the second information, if the UPF receives the data of the remote terminal, the UPF separately transmits the data of the remote terminal through the first communication path and the second communication path.

The data of the remote terminal may be service data of the remote terminal, namely, a payload (payload) in a data packet that is for the remote terminal and that is received by the UPF.

In an optional implementation, after receiving the second information, if the UPF receives the data packet that is for the remote terminal, the UPF may make a replication of the data packet, and then replace a header in the data packet obtained through replication with a header corresponding to the second communication path. In this way, the UPF can transmit the received data packet through the first communication path, and transmit, through the second communication path, the data packet obtained after the header is replaced. Finally, the remote terminal may obtain two data packets. The two data packets have a same payload but different headers. The header corresponding to the second communication path may be understood as an address used by a session on the second communication path.

In another optional implementation, after receiving the second information, if the UPF receives the data packet that is for the remote terminal, the UPF may make a replication of a payload of the data packet, and then add a header corresponding to the second communication path to the payload obtained through replication. In this way, the UPF can transmit the received data packet through the first communication path, and transmit, through the second communication path, the data packet obtained after the header is added to the payload obtained through replication. Finally, the remote terminal may obtain two data packets. The two data packets have a same payload but different headers. The header corresponding to the second communication path may be understood as an address used by a session on the second communication path.

In conclusion, according to the multipath transmission method provided in this application, the UPF may transmit, based on a request of the SMF, the data of the remote terminal through two indirect communication paths, to improve reliability of the data of the remote terminal.

The following describes various embodiments in detail with reference to the accompanying drawings. Before specific embodiments are described, two concepts involved in the methods 800 and 900 are first described in a unified manner.

(1) A first address is an address for transmitting data of a remote terminal by using a first session.

The first address herein is similar to the foregoing first address. For a specific form of the first address and how to obtain the first address, refer to the foregoing description of the second address. Details are not described herein again.

(2) A second address is an address for transmitting the data of the remote terminal by using a second session.

Similarly, the second address herein is similar to the foregoing second address. For a specific form of the second address and how to obtain the second address, refer to the foregoing description of the second address. Details are not described herein again.

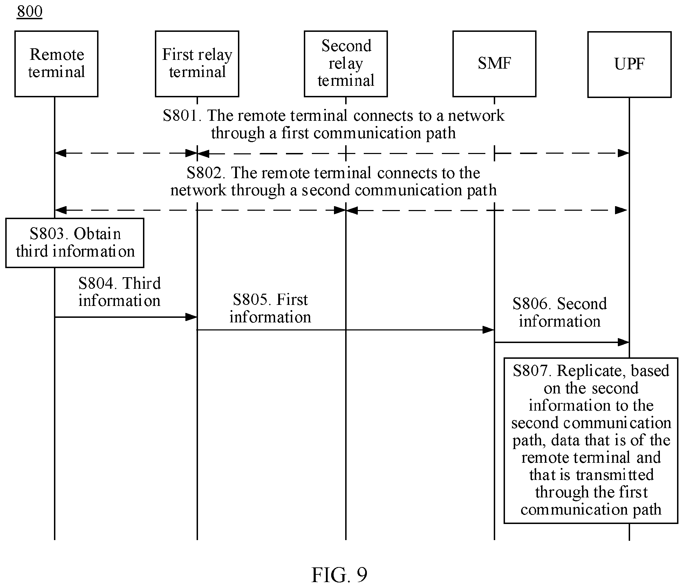

FIG. 9 is a schematic flowchart of still another multipath transmission method according to this application. The method 800 shown in FIG. 9 is described by using an example in which a first device is a remote terminal.

S801. A remote terminal connects to a network through a first communication path.

Specifically, a first sidelink is established between the remote terminal and a first relay terminal, and the first relay terminal establishes a first session. The first relay terminal assigns an IP address for PC5 communication and an IP address for network side communication to the remote terminal, and an SMF corresponding to the first session assigns an IP address corresponding to the first session to the first relay terminal. In this process, the SMF may learn of a first address, and may store a correspondence between the first address and an identifier of the first session.

S802. The remote terminal connects to the network through a second communication path.

Specifically, a second sidelink is established between the remote terminal and a second relay terminal, and the second relay terminal establishes a second session. The second relay terminal assigns an IP address for PC5 communication and an IP address for network side communication to the remote terminal, and an SMF corresponding to the second session assigns an IP address corresponding to the second session to the second relay terminal. In this process, the SMF may learn of a second address, and may store a correspondence between the second address and an identifier of the second session.

After the first communication path and the second communication path are established, a UPF may transmit data of the remote terminal through the first communication path and the second communication path in the following steps.

It should be noted that S801 and S802 are optional steps. During specific implementation, if the first communication path and the second communication path have been established, S801 and S802 do not need to be performed.

S803. The remote terminal obtains third information.

The third information may be for replicating, to the second communication path, the data that is of the remote terminal and that is transmitted through the first communication path.

For different second sessions, the third information may be different. Details are as follows:
Case 1: The second session is a specific session established by the second relay terminal for the remote terminal.

Further, the third information may include the identifier of the second session.

The remote terminal may obtain the identifier of the second session from the second relay terminal.

Case 2: The second session is a session that is of the second relay terminal and that is shared by a plurality of remote terminals.

Further, the third information may include the second address.

It should be understood that if a type of the second session is IPv6, after the sidelink is established between the remote terminal and the second relay terminal, the second relay terminal assigns the second address to the remote terminal, so that the remote terminal can obtain the second address.

In addition, if a type of the second session is IPv4, the second relay terminal may learn of the second address based on IP info that is assigned by the second relay terminal to the remote terminal and that is for network side communication, and an IP address assigned by the SMF to the second relay terminal, and the second relay terminal may send the second address to the remote terminal, so that the remote terminal can obtain the second address.

Optionally, the third information may further include replication indication information, where the replication indication information indicates to replicate, to the second communication path, the data that is of the remote terminal and that is transmitted through the first communication path. For example, the replication indication information may be one bit (bit). This is not limited in this application.

Optionally, the remote terminal obtains the third information from the second relay terminal by using a PC5-S (PC5-Signaling) message.

S804. The remote terminal sends the third information to the first relay terminal. Correspondingly, the first relay terminal receives the third information from the remote terminal.

Optionally, the remote terminal sends the third information to the first relay terminal by using a PC5-S (PC5-Signaling) message.

S805. The first relay terminal sends first information to the SMF based on the third information.

Correspondingly, the SMF receives the first information from the first relay terminal.

Optionally, the first relay terminal sends the first information to the SMF via an AMF. The first information may be carried in a PDU session modification request message.

It should be understood that the SMF is an SMF corresponding to the first session.

Corresponding to the case 1 in S803, the first information may include: the identifier of the second session and an identifier of the second relay terminal. Alternatively, the first information may include: the second address.

The identifier of the second session may be sent by the second relay terminal to the first relay terminal. The second address may be sent by the second relay terminal to the first relay terminal.

Corresponding to the case 2 in S803, the first information may include: the identifier of the second session, an identifier of the second relay terminal, and the first address. Alternatively, the first information may include the first address and the second address.

S806. The SMF sends second information to the UPF based on the first information.

Correspondingly, the UPF receives the second information from the SMF.

Optionally, the second information may be carried in an N4 session modification request message.

Corresponding to the case 1 in S803 and S805, the second information may include the second address.

When the first information includes the identifier of the second session and the identifier of the second relay terminal, the SMF may determine the second address based on the identifier of the second session and the identifier of the second relay terminal.

Corresponding to the case 2 in S803 and S805, the second information may include: the first address and the second address.

When the first information includes the identifier of the second session, the identifier of the second relay terminal, and the first address, the SMF may determine the second address based on the identifier of the second session and the identifier of the second relay terminal.

S807. The UPF replicates, based on the second information to the second communication path, the data that is of the remote terminal and that is transmitted through the first communication path.

This step is the same as S730. For details, refer to S730. Details are not described herein again.

According to the method provided in this application, the remote terminal may request, via the first relay terminal and the SMF, the UPF to transmit data that is on a first established indirect communication path through two communication paths: the indirect communication path and another indirect communication path. Therefore, the UPF may transmit, based on the request of the remote terminal, the data of the remote terminal through the two communication paths, to improve reliability of the data of the remote terminal.

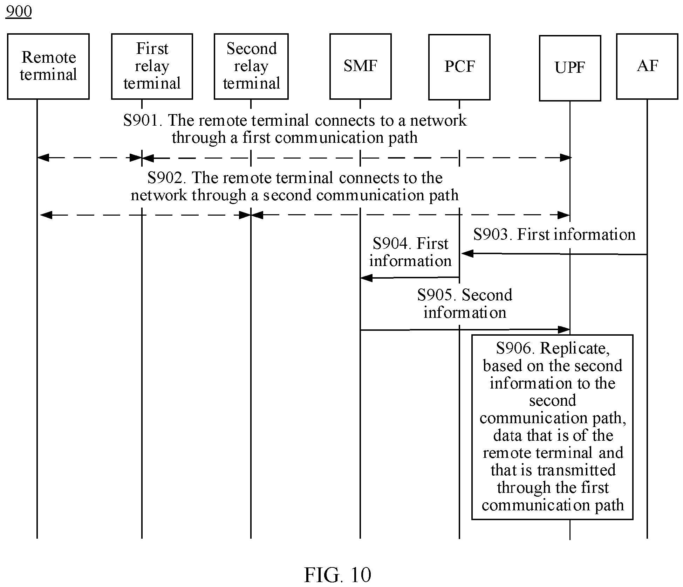

FIG. 10 is a schematic flowchart of a multipath transmission method according to this application. The method 900 shown in FIG. 10 is described by using an example in which a first device is a PCF.

S901 and S902 are the same as S801 and S802. For details, refer to S801 and S802.

It should be noted that S901 and S902 are optional steps. During specific implementation, if the first communication path and the second communication path have been established, S901 and S902 do not need to be performed.

S903. An AF sends first information to a PCF. Correspondingly, the PCF receives the first information from the AF.

It should be understood that the PCF is a PCF selected by the SMF when the first session is established. The PCF is responsible for a session policy of the first session. To be specific, the PCF corresponds to the first session. The first information is for replicating, to the second communication path, the data that is of the remote terminal and that is transmitted through the first communication path.

Optionally, the AF sends the first information to the PCF via an NEF.

Optionally, the first information is carried in a policy authorization creation or update request message initiated by the AF.

For different second sessions, the first information may be different. Details are as follows:

Case 1: The second session is a specific session established by the second relay terminal for the remote terminal.

Further, the first information may include: the identifier of the second session and an identifier of the second relay terminal; or the first information may include: the second address.

The identifier of the second session and the second address may be sent by the second relay terminal to the AF.

Case 2: The second session is a session that is of the second relay terminal and that is shared by a plurality of remote terminals.

Further, the first information may include: the identifier of the second session, an identifier of the second relay terminal, and the first address; or the first information may include: the first address and the second address.

Optionally, the first information further includes replication indication information, where the replication indication information indicates to replicate, to the second communication path, the data that is of the remote terminal and that is transmitted through the first communication path. For example, the replication indication information may be one bit (bit). This is not limited in this application.

S904. The PCF sends the first information to the SMF. Correspondingly, the SMF receives the first information from the PCF.

It should be understood that the SMF is an SMF corresponding to the first session.

Optionally, the first information may be carried in a session management policy association modification message.

S905 and S906 are the same as S806 and S807. For details, refer to S806 and S807.

According to the method provided in this application, the AF may request, via the PCF, the UPF to transmit data that is on a first established indirect communication path through two communication paths: the indirect communication path and another indirect communication path. Therefore, the UPF may transmit, based on the request of the AF, the data of the remote terminal through the two communication paths, to improve reliability of the data of the remote terminal.

It should be noted that, in embodiments described in FIG. 3 to FIG. 10, the UPF transmits data that is on a first established communication path through two communication paths. A person skilled in the art may understand that the method provided in this application may be further extended as follows: The UPF may transmit data that is on a first established communication path through more than two communication paths.

In addition to the multipath transmission method described above, this application further provides the following several multipath transmission methods, to resolve a problem of data transmission reliability of a terminal when the terminal and a server do not support an MPTCP function. Different from the multipath transmission method described above in which a UPF performs data replication transmission, in the method described below, an access network node (a RAN is used as an example below) performs data replication transmission.

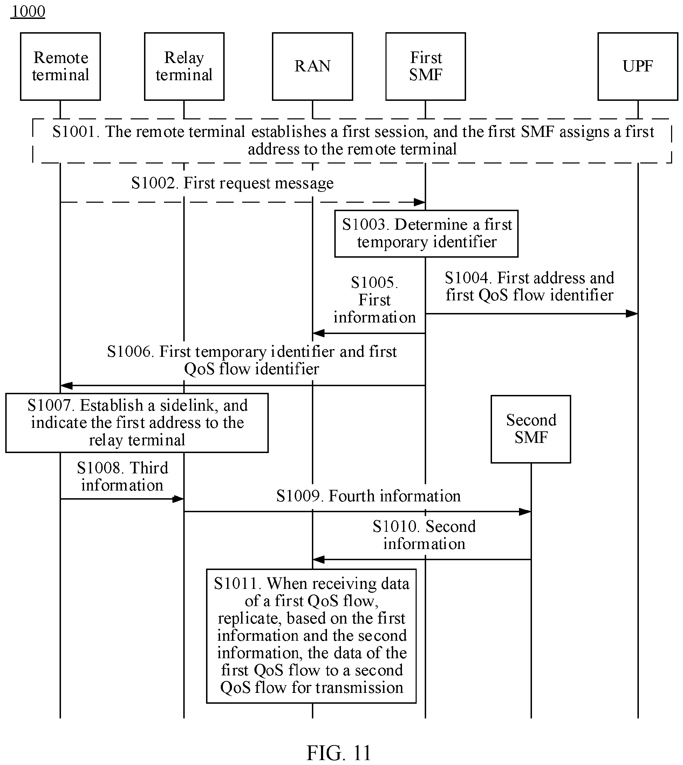

FIG. 11 is a schematic flowchart of a multipath transmission method according to this application. The method 1000 shown in FIG. 11 is described below.

S1001. A remote terminal establishes a first session, and a first SMF assigns a first address to the remote terminal.

Then, the remote terminal may communicate with an application server (application server, AS) based on the first address.

A first QoS flow in the first session is for transmitting first application data of the remote terminal. The first application data is encapsulated by the first address. To be specific, the first QoS flow corresponds to the first address. The first address in the method is the same as the first address in the foregoing description.

It should be understood that the first SMF is an SMF selected by an AMF when the first session is established. To be specific, the first SMF corresponds to the first session.

It should be noted that S1001 is an optional step. During specific implementation, if the first session has been established, S1001 does not need to be performed.

S1002. The remote terminal sends a first request message to the first SMF.

The first request message includes a first QoS flow identifier, and the first request message is for requesting the first SMF to assign a temporary identifier to the first QoS flow. It should be understood that a QoS flow identifier may be represented by a QFI. For example, the first QoS flow identifier may be denoted as a QFI 1.

It should be noted that it is assumed that the first QoS flow has been established in S1001. If the first QoS flow is not established in S1001, the first request message may further include the first address. After receiving the first request message, the first SMF may establish the first QoS flow corresponding to the first address.

Optionally, the remote terminal sends the first request message to the first SMF via the AMF. The first request message may be a PDU session modification request message.

S1003. The first SMF determines a first temporary identifier.

The first temporary identifier is a temporary identifier assigned by the first SMF to the first QoS flow.

It should be noted that S1003 may be performed after the first SMF receives the first request message of the remote terminal, or may be independently performed by the first SMF. To be specific, S1003 is an optional step.

S1004. The first SMF sends the first address and the first QoS flow identifier to a UPF.

Specifically, after receiving information sent by the first SMF, the UPF may learn that the first QoS flow corresponds to the first address.

Optionally, the first address and the first QoS flow identifier may be carried in an N4 session modification request message.

It should be noted that a sequence of S1003 and S1004 is not limited in this application. S1004 may be performed before S1003, or may be performed after S1003, or S1003 and S1004 may be performed simultaneously.

It should be understood that S1004 is an optional step.

S1005. The first SMF sends first information to a RAN.

The first information includes the first temporary identifier and the first QoS flow identifier. The RAN may learn, based on the first information, that the temporary identifier of the first QoS flow is the first temporary identifier.

Optionally, the first SMF sends the first information to the RAN via the AMF. The first information is carried in an N1N2 message transfer (N1N2 Message Transfer) message.

It should be noted that a sequence of S1004 and S1005 is not limited in this application. S1005 may be performed before S1004, or may be performed after S1004, or S1004 and S1005 may be performed simultaneously.

S1006. The first SMF sends the first temporary identifier and the first QoS flow identifier to the remote terminal.

It should be understood that a sequence of S1005 and S1006 is not limited in this application.

Optionally, the first SMF sends the first temporary identifier and the first QoS flow identifier to the remote terminal via the AMF. The first temporary identifier and the first QoS flow identifier are carried in an N1N2 message transfer (N1N2 Message Transfer) message.

Optionally, after receiving the first temporary identifier and the first QoS flow identifier, the remote terminal stores a relationship between the first temporary identifier and the first QoS flow identifier. Further, the remote terminal learns of a relationship between the first temporary identifier and a first application based on a relationship between the first QoS flow and the first application.

S1007. The remote terminal establishes a sidelink with a relay terminal, and the remote terminal notifies the relay terminal that an IP address of the remote terminal is the first address.

In addition, if the relay terminal does not establish a session, the relay terminal establishes a second session, and may transmit data of the remote terminal by using the second session. If the relay terminal establishes a session (denoted as a second session), the relay terminal may transmit data of the remote terminal by using the second session. A second SMF is responsible for the second session. The first SMF and the second SMF may be a same SMF, or may be different SMFs.

It should be noted that the remote terminal and the relay terminal access a same RAN. Specifically, during relay discovery or selection, the remote terminal selects a terminal whose ID is the same as that of a cell accessed by the remote terminal as the relay terminal of the remote terminal. For example, in a relay discovery process, a relay terminal may send an ID of a cell on which the relay terminal camps to a remote terminal. If the remote terminal determines that the cell ID received by the remote terminal is the same as an ID of a cell accessed by the remote terminal, the remote terminal selects the relay terminal to provide a relay service for the remote terminal.

It should be further noted that step S1007 may alternatively be performed before step S1002 or S1003, or may be performed simultaneously with step S1002 or S1003.

S1008. The remote terminal sends third information to the relay terminal.

The third information includes the first temporary identifier. The third information is used by the relay terminal to request the second SMF to configure an association relationship between the first QoS flow and a QoS flow of the second session for the RAN. The association relationship is used by the RAN to replicate, for transmission, data of the first QoS flow to the QoS flow of the second session associated with the first QoS flow.

Specifically, when determining that the first application data needs to be transmitted through multipath, the remote terminal determines the first temporary identifier based on the relationship between the first temporary identifier and the first application, and then sends the third information to the relay terminal.

Optionally, the remote terminal sends the third information to the relay terminal by using a PC5-S (PC5-Signaling) message.

S1009. The relay terminal sends fourth information to the second SMF based on the third information.

The fourth information is used by the second SMF to configure the association relationship between the first QoS flow and the QoS flow of the second session for the RAN. The fourth information includes the first temporary identifier and an identifier of the remote terminal, or the fourth information includes the first temporary identifier and a second QoS flow identifier of the second session.

Optionally, the relay terminal sends the fourth information to the second SMF via the AMF. The fourth information may be carried in a PDU session modification request message.

S1010. The second SMF sends second information to the RAN based on the fourth information.

The second information includes the second QoS flow identifier and the first temporary identifier. The second information is used by the RAN to replicate the data of the first QoS flow to a second QoS flow for transmission.

It should be understood that if the fourth information includes the first temporary identifier and the identifier of the remote terminal, the second SMF may determine that a QoS flow for transmitting the data of the remote terminal is the second QoS flow. Therefore, the second information may include the second QoS flow identifier and the first temporary identifier.

It should be further understood that if the fourth information includes the first temporary identifier and the second QoS flow identifier, the second information and the fourth information may be the same.

Optionally, the second SMF sends the second information to the RAN via the AMF. The second information is carried in an N1N2 message transfer (N1N2 Message Transfer) message.

S101 1. When receiving the data of the first QoS flow, the RAN replicates, based on the first information and the second information, the data of the first QoS flow to the second QoS flow for transmission.

Specifically, when receiving the data of the first QoS flow in the first session, the RAN not only can transmit the data to the remote terminal by using the first QoS flow, but also can determine, based on the first information, that the first QoS flow is associated with the first temporary identifier, and determine, based on the second information, that the first temporary identifier is associated with the second QoS flow in the second session, so that the data of the first QoS flow can be replicated to the second QoS flow, to send the data of the first QoS flow to the relay terminal by using the second QoS flow. If the relay terminal identifies that an IP address in the received data is the first address, the relay terminal sends the data to the remote terminal through the sidelink to the remote terminal.

In conclusion, according to the multipath transmission method provided in this application, the SMF configures the association relationship between the first QoS flow of the remote terminal and the second QoS flow of the relay terminal for the RAN, so that when receiving the data of the first QoS flow, the RAN not only can send the data to the remote terminal by using the first QoS flow, but also can replicate, based on the association relationship between the first QoS flow and the second QoS flow, the data of the first QoS flow to the second QoS flow to transmit the data to the relay terminal so that the relay terminal may transmit the data to the remote terminal through the sidelink between the relay terminal and the remote terminal. In this way, reliability of the data of the remote terminal can be improved.

It should be understood that the method 1000 describes performing data replication based on a QoS flow granularity. The method may be further extended to performing data replication based on a session granularity. To be specific, the first session is associated with the second session. Correspondingly, the second session is only for transmitting the data of the remote terminal. In addition, based on the flow granularity and the session granularity, the first session and the second session may be first associated, and then the first QoS flow and the second QoS flow are associated.

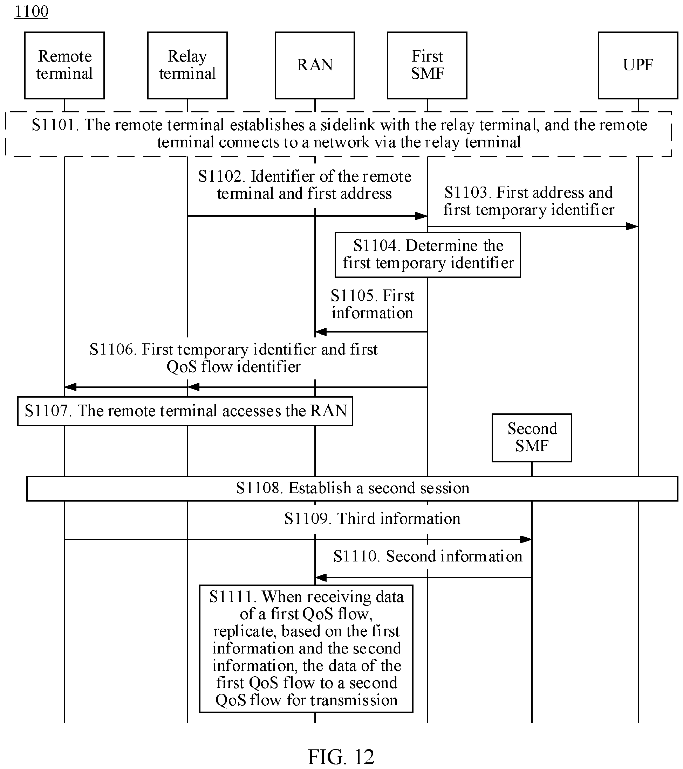

FIG. 12 is a schematic flowchart of a multipath transmission method according to this application. The method 1100 shown in FIG. 12 is described below.

S1101. A remote terminal establishes a sidelink with a relay terminal, and the remote terminal connects to a network via the relay terminal.

Specifically, the sidelink is established between the remote terminal and the relay terminal, and the relay terminal establishes a first session. The relay terminal assigns an IP address for PC5 communication and an IP address for network side communication to the remote terminal, and a first SMF assigns an IP address corresponding to the first session to the relay terminal.

It should be understood that the first session corresponds to the first SMF. The first session herein is similar to the second session in the methods 300 to 900 described above.

It should be noted that S1101 is an optional step. During specific implementation, if the sidelink between the remote terminal and the relay terminal and the first session have been established, S1101 does not need to be performed.

S1102. The relay terminal sends an identifier of the remote terminal and a first address to the first SMF.

The first address is an address for transmitting first application data of the remote terminal by using the first session. The first address herein is similar to the second address in the methods 300 to 900 described above. For details, refer to the foregoing description. Details are not described herein again.

S1103. The first SMF sends the first address and a first QoS flow identifier to a UPF.

A first QoS flow is for transmitting the first application data of the remote terminal. To be specific, the first QoS flow is for transmitting data of the first address. In other words, the first QoS flow corresponds to the first address. After receiving information sent by the first SMF, the UPF may learn that the first QoS flow corresponds to the first address.

It should be understood that the first QoS flow may be established before S1102, or may be established after S1102. After the first QoS flow is established, the first SMF may notify the relay terminal of the first QoS flow identifier.

It should be further understood that S 1103 is an optional step.

S1104. The first SMF determines a first temporary identifier.

The first temporary identifier is a temporary identifier of the first QoS flow of the first session.

It should be noted that a sequence of S1103 and S1104 is not limited in this application. S 1104 may be performed before S1103, or may be performed after S1103, or S1103 and S1104 may be performed simultaneously.

Optionally, before S1104, the method may further include: The relay terminal sends a first request message to the first SMF, where the first request message may include the first QoS flow identifier. The first request message is for requesting the first SMF to assign a temporary identifier to the first QoS flow.

S 1105. The first SMF sends first information to a RAN.

The first information includes the first QoS flow identifier and the first temporary identifier.

Optionally, the first SMF sends the first information to the RAN via an AMF. The first information is carried in an N1N2 message transfer (N1N2 Message Transfer) message.

S1106. The first SMF sends the first QoS flow identifier and the first temporary identifier to the relay terminal, and the relay terminal sends the first QoS flow identifier and the first temporary identifier to the remote terminal.

For example, the first temporary identifier and the first QoS flow identifier may be carried in an N1N2 message transfer (N1N2 Message Transfer) message.

Optionally, after receiving the first temporary identifier and the first QoS flow identifier, the remote terminal stores a relationship between the first temporary identifier and the first QoS flow identifier. Further, the remote terminal learns of a relationship between the first temporary identifier and a first application based on a relationship between the first QoS flow and the first application.

S1107. The remote terminal accesses the RAN accessed by the relay terminal.

For example, the remote terminal obtains, from the relay terminal, a cell ID corresponding to the RAN accessed by the relay terminal, and then accesses the RAN corresponding to the cell ID.

S1108. The remote terminal establishes a second session.

It should be understood that the second session herein is similar to the first session in the methods 300 to 900 described above.

S1109. The remote terminal sends third information to a second SMF.

The third information includes the first temporary identifier and a second QoS flow identifier of the second session. The third information is for requesting the second SMF to configure an association relationship between the first QoS flow and a second QoS flow for the RAN. The association relationship is used by the RAN to replicate data of the first QoS flow to a QoS flow of the second session for transmission.

Specifically, when determining that the first application data needs to be transmitted through multipath, the remote terminal determines the first temporary identifier based on the relationship between the first temporary identifier and the first application, and then sends the third information to the relay terminal.

It should be understood that the second SMF corresponds to the second session. To be specific, the second SMF is responsible for the second session. The second SMF and the first SMF may be a same SMF, or may be different SMFs. This is not limited in this application.

S1110. The second SMF sends second information to the RAN based on the third information.

The second information includes the second QoS flow identifier and the first temporary identifier. The second information is used by the RAN to replicate the data of the first QoS flow to the second QoS flow for transmission.

It should be understood that the second information is the same as the third information.

S 1111. When receiving the data of the first QoS flow, the RAN replicates, based on the first information and the second information, the data of the first QoS flow to the second QoS flow for transmission.

Specifically, when receiving the data of the first QoS flow in the first session, the RAN not only can transmit the data to the remote terminal by using the first QoS flow, but also can determine, based on the first information, that the first QoS flow is associated with the first temporary identifier, and determine, based on the second information, that the first temporary identifier is associated with the second QoS flow in the second session, so that the data of the first QoS flow can be replicated to the second QoS flow, to send the data of the first QoS flow to the remote terminal by using the second QoS flow.

In conclusion, according to the multipath transmission method provided in this application, the SMF configures the association relationship between the first QoS flow of the relay terminal and the second QoS flow of the remote terminal for the RAN, so that when receiving the data of the first QoS flow, the RAN not only can send the data to the remote terminal by using the first QoS flow, but also can replicate, based on the association relationship between the first QoS flow and the second QoS flow, the data of the first QoS flow to the second QoS flow to transmit the data to the remote terminal. In this way, reliability of the data of the remote terminal can be improved.

It should be understood that, similar to the method 1000, the method 1100 may be further extended to performing data replication based on a session granularity, or performing data replication based on a flow granularity and a session granularity.

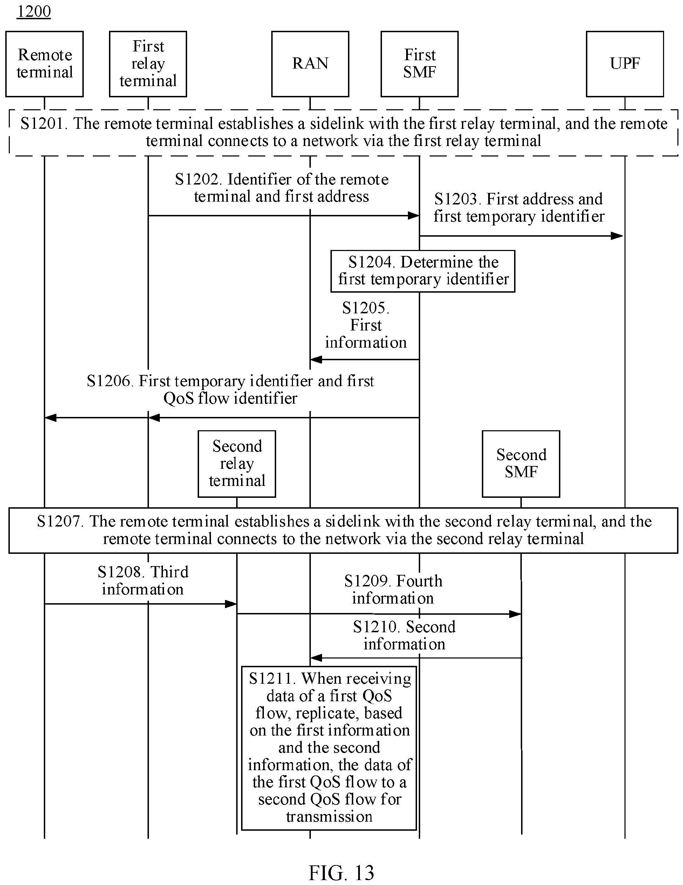

FIG. 13 is a schematic flowchart of a multipath transmission method according to this application. The method 1200 shown in FIG. 13 is described below.

S1201. A remote terminal establishes a sidelink with a first relay terminal, and the remote terminal connects to a network via the first relay terminal.

Specifically, the sidelink is established between the remote terminal and the first relay terminal, and the first relay terminal establishes a first session. The first relay terminal assigns an IP address for PC5 communication and an IP address for network side communication to the remote terminal, and a first SMF assigns an IP address corresponding to the first session to the first relay terminal.

It should be understood that the first SMF corresponds to the first session. The first session herein is similar to the second session in the methods 300 to 900 described above.

It should be noted that S 1201 is an optional step. During specific implementation, if the sidelink between the remote terminal and the first relay terminal and the first session have been established, S1201 does not need to be performed.

S1202. The first relay terminal sends an identifier of the remote terminal and a first address to the first SMF.

The first address is an address for transmitting first application data of the remote terminal by using the first session. The first address herein is similar to the second address in the methods 300 to 900 described above. For details, refer to the foregoing description. Details are not described herein again.

S1203. The first SMF sends the first address and a first QoS flow identifier to a UPF.

A first QoS flow is for transmitting the first application data of the remote terminal. To be specific, the first QoS flow is for transmitting data of the first address. In other words, the first QoS flow corresponds to the first address. After receiving information sent by the first SMF, the UPF may learn that the first QoS flow corresponds to the first address.

It should be understood that the first QoS flow may be established before S1202, or may be established after S1202. After the first QoS flow is established, the first SMF may notify the first relay terminal of the first QoS flow identifier.

It should be further understood that S1203 is an optional step.

S1204. The first SMF determines a first temporary identifier.

The first temporary identifier is a temporary identifier of the first QoS flow of the first session.

It should be noted that a sequence of S1203 and S1204 is not limited in this application. S1204 may be performed before S1203, or may be performed after S1203, or S1203 and S1204 may be performed simultaneously.

Optionally, before S1204, the method may further include: The first relay terminal sends a first request message to the first SMF, where the first request message may include the first QoS flow identifier. The first request message is for requesting the first SMF to assign a temporary identifier to the first QoS flow.

S1205. The first SMF sends first information to a RAN.

The first information includes the first QoS flow identifier and the first temporary identifier.

Optionally, the first SMF sends the first information to the RAN via an AMF. The first information is carried in an N1N2 message transfer (N1N2 Message Transfer) message.

S1206. The first SMF sends the first QoS flow identifier and the first temporary identifier to the first relay terminal, and the first relay terminal sends the first QoS flow identifier and the first temporary identifier to the remote terminal.

For example, the first temporary identifier and the first QoS flow identifier may be carried in an N1N2 message transfer (N1N2 Message Transfer) message.

Optionally, after receiving the first temporary identifier and the first QoS flow identifier, the remote terminal stores a relationship between the first temporary identifier and the first QoS flow identifier. Further, the remote terminal learns of a relationship between the first temporary identifier and a first application based on a relationship between the first QoS flow and the first application.

S1207. The remote terminal establishes a sidelink with a second relay terminal, the remote terminal connects to the network by using the second relay terminal, and the remote terminal notifies the second relay terminal that an IP address of the remote terminal is a second address.

Specifically, the sidelink is established between the remote terminal and the second relay terminal, and the second relay terminal establishes a second session. The second relay terminal assigns an IP address for PC5 communication and an IP address for network side communication to the remote terminal, and a second SMF assigns an IP address corresponding to the second session to the second relay terminal.

It should be understood that the second SMF corresponds to the second session. The second session herein is similar to the second session in the methods 300 to 900 described above, and the second address is similar to the second address in the methods 300 to 900 described above. The first SMF and the second SMF may be a same SMF, or may be different SMFs. This is not limited in this application.

It should be noted that the first relay terminal and the second relay terminal access a same RAN.

It should be further noted that S1207 is an optional step. During specific implementation, if the sidelink between the remote terminal and the second relay terminal and the second session have been established, S 1207 does not need to be performed.

S1208. The remote terminal sends third information to the second relay terminal.

The third information includes the first temporary identifier and the first QoS flow identifier. The third information is used by the second relay terminal to request the second SMF to configure an association relationship between the first QoS flow and a QoS flow of the second session for the RAN. The association relationship is used by an access network node to replicate, for transmission, data of the first QoS flow to the QoS flow of the second session associated with the first QoS flow.

Specifically, when determining that the first application data needs to be transmitted through multipath, the remote terminal determines the first temporary identifier based on the relationship between the first temporary identifier and the first application, and then sends the third information to the relay terminal.

S1209. The second relay terminal sends fourth information to the second SMF based on the third information.

The fourth information includes the first temporary identifier and an identifier of the remote terminal, or the fourth information includes the first temporary identifier and a second QoS flow identifier of the second session. The fourth information is used by the second SMF to configure the association relationship between the first QoS flow and the QoS flow of the second session for the RAN.

Optionally, the second relay terminal sends the fourth information to the second SMF via the AMF. The fourth information may be carried in a PDU session modification request message.

S1210. The second SMF sends second information to the RAN based on the fourth information.

The second information includes the second QoS flow identifier and the first temporary identifier. The second information is used by the RAN to replicate the data of the first QoS flow to a second QoS flow for transmission.

It should be understood that if the fourth information includes the first temporary identifier and the identifier of the remote terminal, the second SMF may determine that a QoS flow for transmitting the data of the remote terminal is the second QoS flow. Therefore, the second information may include the second QoS flow identifier and the first temporary identifier.

It should be further understood that if the fourth information includes the first temporary identifier and the second QoS flow identifier, the second information and the fourth information may be the same.

Optionally, the second SMF sends the second information to the RAN via the AMF. The second information is carried in an N1N2 message transfer (N1N2 Message Transfer) message.

S 1211. When receiving the data of the first QoS flow, the RAN replicates, based on the first information and the second information, the data of the first QoS flow to the second QoS flow for transmission.

Specifically, when receiving the data of the first QoS flow in the first session, the RAN not only can transmit the data to the remote terminal by using the first QoS flow, but also can determine, based on the first information, that the first QoS flow is associated with the first temporary identifier, and determine, based on the second information, that the first temporary identifier is associated with the second QoS flow in the second session, so that the data of the first QoS flow can be replicated to the second QoS flow, to send the data of the first QoS flow to the relay terminal by using the second QoS flow. If the relay terminal identifies that an IP address in the received data is the first address, the relay terminal sends the data to the remote terminal through the sidelink to the remote terminal.

In conclusion, according to the multipath transmission method provided in this application, the SMF configures the association relationship between the first QoS flow of the first relay terminal and the second QoS flow of the second relay terminal for the RAN, so that when receiving the data of the first QoS flow, the RAN not only can send the data to the remote terminal by using the first QoS flow, but also can replicate, based on the association relationship between the first QoS flow and the second QoS flow, the data of the first QoS flow to the second QoS flow to transmit the data to the remote terminal. In this way, reliability of the data of the remote terminal can be improved.

It should be understood that, similar to the methods 1000 and 1100, the method 1200 may be further extended to performing data replication based on a session granularity, or performing data replication based on a flow granularity and a session granularity.

It should be understood that various solutions in embodiments of this application may be properly combined for use, and explanations or descriptions of terms in embodiments may be mutually referred to or explained in various embodiments. This is not limited.

It should be further understood that sequence numbers of the foregoing processes do not mean execution sequences in various embodiments of this application. The execution sequences of the processes should be determined according to functions and internal logic of the processes, and should not be construed as any limitation on the implementation processes of this application. Various numerical numbers or sequence numbers involved in the foregoing processes are merely distinguished for ease of description, and should not constitute any limitation on the implementation processes of embodiments of this application.

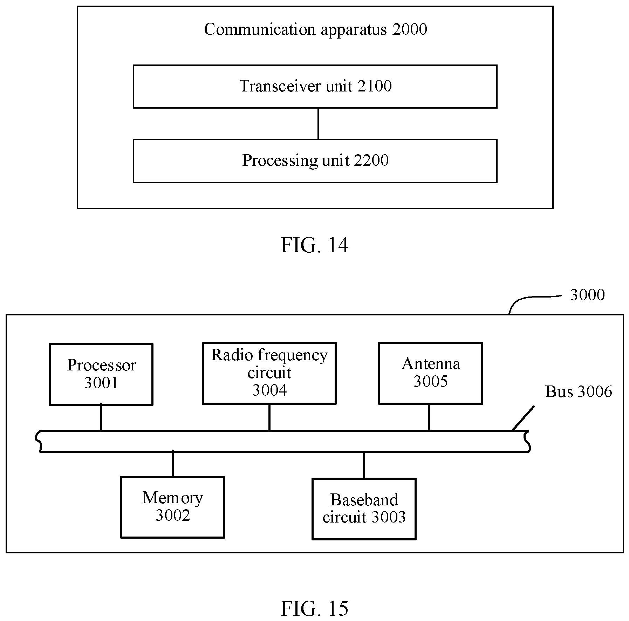

The foregoing describes in detail the methods provided in embodiments of this application with reference to FIG. 3 to FIG. 13. The following describes in detail apparatuses provided in embodiments of this application with reference to FIG. 14 to FIG. 16.

FIG. 14 is a schematic block diagram of a communication apparatus according to an embodiment this application. As shown in FIG. 14, the communication apparatus 2000 may include a transceiver unit 2100 and a processing unit 2200.

The transceiver unit 2100 may include a sending unit and/or a receiving unit. The transceiver unit 2100 may be a transceiver (including a transmitter and/or a receiver), an input/output interface (including an input interface and/or an output interface), a pin, a circuit, or the like. The transceiver unit 2100 may be configured to perform the sending and/or receiving steps in the foregoing method embodiments.

The processing unit 2200 may be a processor (which may include one or more processors), a processing circuit having a function of a processor, or the like, and may be configured to perform a step other than the sending and receiving steps in the foregoing method embodiments.

Optionally, the communication apparatus may further include a storage unit. The storage unit may be a memory, an internal storage unit (for example, a register or a cache), an external storage unit (for example, a read-only memory or a random access memory), or the like. The storage unit is configured to store instructions. The processing unit 2200 executes the instructions stored in the storage unit, so that the communication apparatus performs the foregoing methods.

In a design, the communication apparatus 2000 may correspond to the user plane function node or the UPF in any one of the method 200 to the method 900, and may perform an operation performed by the user plane function node or the UPF in the corresponding method.

For example, the transceiver unit 2100 is configured to receive second information from a session management function node. The second information is used by the apparatus 2000 to replicate, to a second communication path, data that is of a remote terminal and that is transmitted through a first communication path. The processing unit 2200 is configured to replicate, based on the second information to the second communication path, the data that is of the remote terminal and that is transmitted through the first communication path. The first communication path is a first session of the remote terminal, and the second communication path includes: a second session of a relay terminal corresponding to the remote terminal and a sidelink between the relay terminal and the remote terminal. Alternatively, the second communication path is a first session of the remote terminal, and the first communication path includes: a second session of a relay terminal corresponding to the remote terminal and a sidelink between the relay terminal and the remote terminal.

It should be understood that the transceiver unit 2100 and the processing unit 2200 may further perform other operations performed by the user plane function node or the UPF in any one of the method 200 to the method 900. Details are not described herein again.

In a design, the communication apparatus 2000 may correspond to the session management function node or the SMF in any one of the method 200 to the method 900, and may perform an operation performed by the session management function node or the SMF in the corresponding method.

For example, the transceiver unit 2100 is configured to: receive first information from a first device, where the first information is for replicating, to a second communication path, data that is of a remote terminal and that is transmitted through a first communication path; and send second information to a user plane function node based on the first information. The user plane function node is a user plane function node corresponding to the first communication path. The second information is used by the user plane function node to replicate, to the second communication path, the data that is of the remote terminal and that is transmitted through the first communication path. The first communication path is a first session of the remote terminal, and the second communication path includes: a second session of a relay terminal corresponding to the remote terminal and a sidelink between the relay terminal and the remote terminal. Alternatively, the second communication path is a first session of the remote terminal, and the first communication path includes: a second session of a relay terminal corresponding to the remote terminal and a sidelink between the relay terminal and the remote terminal.

It should be understood that the transceiver unit 2100 and the processing unit 2200 may further perform other operations performed by the session management function node or the SMF in any one of the method 200 to the method 900. Details are not described herein again.

In a design, the communication apparatus 2000 may correspond to the remote terminal in any one of the method 200 to the method 900, and may perform an operation performed by the remote terminal in the corresponding method.

For example, the processing unit 2200 or the transceiver unit 2100 is configured to obtain third information. The transceiver unit 2100 is configured to send the third information to a second device. The third information is for replicating, to a second communication path, data that is of the apparatus 2000 and that is transmitted through a first communication path. The first communication path is a first session of the apparatus 2000, and the second communication path includes: a second session of a relay terminal corresponding to the apparatus 2000, and a sidelink between the relay terminal and the apparatus 2000. Alternatively, the second communication path is a first session of the apparatus 2000, and the first communication path includes: a second session of a relay terminal corresponding to the apparatus 2000, and a sidelink between the relay terminal and the apparatus 2000.

It should be understood that the transceiver unit 2100 and the processing unit 2200 may further perform other operations performed by the remote terminal in any one of the method 200 to the method 900. Details are not described herein again.

In a design, the communication apparatus 2000 may correspond to the relay terminal in any one of the method 200 to the method 900, and may perform an operation performed by the relay terminal in the corresponding method.

For example, the transceiver unit 2100 is configured to receive third information from a remote terminal. The third information is for replicating, to a second communication path, data that is of the remote terminal and that is transmitted through a first communication path. The first communication path includes: a second session of the apparatus 2000 corresponding to the remote terminal and a sidelink between the apparatus 2000 and the remote terminal, and the second communication path is a first session of the remote terminal. The transceiver unit 2100 is configured to send first information to a session management function node based on the third information. The first information is for replicating, to the second communication path, the data that is of the remote terminal and that is transmitted through the first communication path.

It should be understood that the transceiver unit 2100 and the processing unit 2200 may further perform other operations performed by the relay terminal in any one of the method 200 to the method 900. Details are not described herein again.

In a design, the communication apparatus 2000 may correspond to any network element (for example, the SMF, the RAN, the relay terminal, or the remote terminal) in any one of the method 1000 to the method 1200, and may perform an operation performed by the corresponding network element in the corresponding method. For details, refer to the corresponding operation in the corresponding method, and details are not described herein again.

It should be understood that division into the foregoing units is merely function division, and may be another division during actual implementation.

It should be further understood that the foregoing processing unit may be implemented by using hardware, may be implemented by using software, or may be implemented by a combination of software and hardware.

FIG. 15 is a schematic diagram of a structure of a communication apparatus according to this application. As shown in FIG. 15, the communication apparatus 3000 may implement a function that can be implemented by any network element in any one of the foregoing method embodiments.

The communication apparatus 3000 may include a processor 3001. The processor 3001 may also be referred to as a processing unit, and may implement a specific control function. The processor 3001 may be configured to control the communication apparatus 3000, execute a software program, and process data of the software program.

In an optional design, the processor 3001 may alternatively store instructions and/or data, and the instructions and/or data may be run by the processor 3001, so that the communication apparatus 3000 performs the method described in the foregoing method embodiments.

Optionally, the communication apparatus 3000 may include a memory 3002. Instructions may be stored in the memory 3002. The instructions may be run on the processor, so that the communication apparatus 3000 performs the method described in the foregoing method embodiments. Optionally, the memory may further store data. The processor and the memory may be separately disposed, or may be integrated together. For example, the correspondence described in the foregoing method embodiments may be stored in the memory or stored in the processor.

Optionally, the communication apparatus 3000 may include a baseband circuit 3003. The baseband circuit 3003 is mainly configured to perform baseband processing.

Optionally, the communication apparatus 3000 may include a radio frequency circuit 3004. The radio frequency circuit 3004 is mainly configured to send and receive a radio frequency signal and perform conversion between the radio frequency signal and a baseband signal, for example, configured to send a BAR frame in the foregoing method embodiments. The radio frequency circuit 3004 may also be referred to as a transceiver unit, a transceiver machine, a transceiver circuit, a transceiver, or the like.

Optionally, the communication apparatus 3000 may include an antenna 3005. The antenna 3005 is mainly configured to send and receive a signal.

Optionally, the communication apparatus 3000 may include a bus 3006. The bus 3006 is configured to connect various parts of the communication apparatus 3000, for example, the processor 3001, the memory 3002, the baseband circuit 3003, the radio frequency circuit 3004, and the antenna 3005.

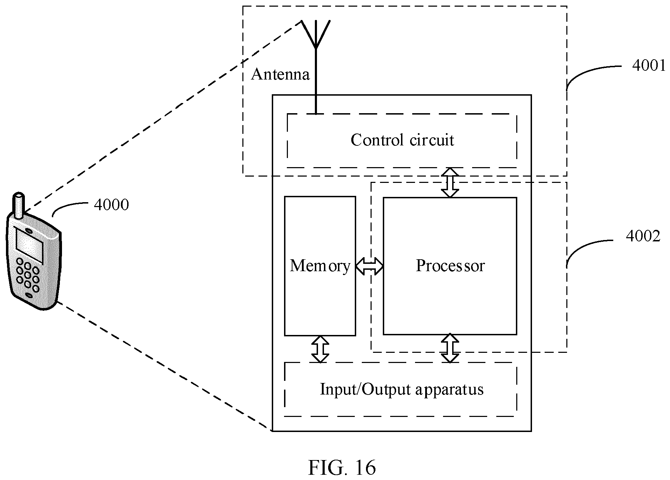

FIG. 16 is a schematic diagram of a structure of a communication apparatus 4000 according to this application. For ease of description, FIG. 16 shows only main components of the communication apparatus 4000. The communication apparatus 4000 may implement a function of the remote terminal or the relay terminal in any one of the foregoing method embodiments.

As shown in FIG. 16, the communication apparatus 4000 includes a processor and a memory.

Optionally, the communication apparatus 4000 includes a control circuit, an antenna, and an input/output apparatus.

The processor is mainly configured to process a communication protocol and communication data, control the entire communication apparatus 4000, execute a software program, and process data of the software program, for example, configured to support the communication apparatus 4000 in performing an operation performed by the remote terminal or the relay terminal described in the foregoing method embodiments. The memory is mainly configured to store the software program and the data. The control circuit is mainly configured to perform conversion between a baseband signal and a radio frequency signal, and process the radio frequency signal. A combination of the control circuit and the antenna may also be referred to as a transceiver, which is mainly configured to send and receive a radio frequency signal in a form of an electromagnetic wave. The input/output apparatus, for example, a touchscreen, a display, or a keyboard, is mainly configured to receive data input by a user and output data to the user.

After the communication apparatus 4000 is powered on, the processor may read the software program in the memory, interpret and execute instructions of the software program, and process the data of the software program. When data needs to be wirelessly sent, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the communication apparatus 4000, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 16 shows only one memory and one processor. In an actual communication apparatus 4000, there may be a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data. The central processing unit is mainly configured to control the entire communication apparatus 4000, execute a software program, and process data of the software program. The processor in FIG. 16 integrates functions of the baseband processor and the central processing unit. A person skilled in the art may understand that the baseband processor and the central processing unit may alternatively be independent processors and are interconnected by using a technology such as a bus. A person skilled in the art may understand that the communication apparatus 4000 may include a plurality of baseband processors to adapt to different network standards, and the communication apparatus 4000 may include a plurality of central processing units to enhance a processing capability of the communication apparatus 4000. All the components of the communication apparatus 4000 may be connected through various buses. The baseband processor may also be expressed as a baseband processing circuit or a baseband processing chip. The central processing unit may also be expressed as a central processing circuit or a central processing chip. A function of processing the communication protocol and the communication data may be embedded in the processor, or may be stored in the storage unit in a form of the software program. The processor executes the software program to implement a baseband processing function.

For example, in this embodiment of this application, an antenna and a control circuit having a transceiver function may be considered as a transceiver unit 4001 of the communication apparatus 4000, and a processor having a processing function may be considered as a processing unit 4002 of the communication apparatus 4000. As shown in FIG. 16, the communication apparatus 4000 includes the transceiver unit 4001 and the processing unit 4002. The transceiver unit may also be referred to as a transceiver, a transceiver machine, a transceiver apparatus, or the like. Optionally, a device configured to implement a receiving function in the transceiver unit 4001 may be considered as a receiving unit, and a device configured to implement a sending function in the transceiver unit 4001 may be considered as a sending unit. To be specific, the transceiver unit 4001 includes the receiving unit and the sending unit. For example, the receiving unit may also be referred to as a receiver machine, a receiver, a receiver circuit, or the like, and the sending unit may be referred to as a transmitter machine, a transmitter, a transmitter circuit, or the like.

It should be noted that the processor in this embodiment of this application may be an integrated circuit chip, and has a signal processing capability. In an implementation process, steps in the foregoing method embodiments may be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, a system on chip (system on chip, SoC), a central processing unit (central processing unit, CPU), a network processor (network processor, NP), a micro controller unit (micro controller unit, MCU), a programmable logic device (programmable logic device, PLD) or another integrated chip. It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but is not limited to these memories and any memory of another appropriate type.

According to the method provided in embodiments of this application, this application further provides a computer program product. The computer program product includes: computer program code. When the computer program code is run on a computer, the computer is enabled to execute an operation performed by any network element (for example, the SMF, the UPF, the remote terminal, or the relay terminal) in any one of the foregoing method embodiments.

According to the method provided in embodiments of this application, this application further provides a computer-readable medium. The computer-readable medium stores program code. When the program code is run on a computer, the computer is enabled to execute an operation performed by any network element (for example, the SMF, the UPF, the remote terminal, or the relay terminal) in the foregoing method embodiments.

According to the method provided in embodiments of this application, this application further provides a system, including one or more network elements in any one of the method embodiments.

An embodiment of this application further provides a communication apparatus, including a processor and an interface. The processor is configured to perform the method in any one of the foregoing method embodiments.

It should be understood that the foregoing communication apparatus may be a chip. For example, the communication apparatus may be a field programmable gate array (field programmable gate array, FPGA), a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD) or another integrated chip. The methods, steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but is not limited to these memories and any memory of another appropriate type.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk drive, a hard disk drive, or a magnetic tape), an optical medium (for example, a high-density digital video disc (digital video disc, DVD)), a semiconductor medium (for example, a solid state drive (solid state drive, SSD)), or the like.

The network device and the terminal device in the foregoing apparatus embodiments completely correspond to the network device or the terminal device in the method embodiments. A corresponding module or unit performs a corresponding step. For example, a communication unit (transceiver) performs a receiving or sending step in the method embodiments, and a step other than the sending and receiving steps may be performed by a processing unit (processor). For a function of a specific unit, refer to a corresponding method embodiment. There may be one or more processors.

Terms such as "component", "module", and "system" used in this specification are for representing a computer-related entity, hardware, firmware, a combination of hardware and software, software, or software being executed. For example, the component may be, but is not limited to, a process that is run on a processor, a processor, an object, an executable file, an execution thread, a program, or a computer. As illustrated by using figures, both a computing device and an application that is run on the computing device may be components. One or more components may camp on a process or an execution thread, and the components may be located on one computer or distributed between two or more computers. In addition, these components may be executed by various computer-readable media that store various data structures. The components may communicate by using a local or remote process and based on, for example, a signal having one or more data packets (for example, data from two components interacting with another component in a local system, in a distributed system, or across a network such as the Internet interacting with other systems by using the signal).

It should be understood that an "embodiment" mentioned throughout this specification means that particular features, structures, or characteristics related to this embodiment are included in at least one embodiment of this application. Therefore, various embodiments throughout this specification do not necessarily refer to a same embodiment. In addition, these particular features, structures, or characteristics may be combined in one or more embodiments in any appropriate manner.

It should be understood that in embodiments of this application, numbers such as "first" and "second" are merely for distinguishing between different objects, for example, to distinguish between different network devices, and constitute no limitation on the scope of embodiments of this application. Embodiments of this application are not limited thereto.

It should be further understood that in this application, "when", "if', and "if" mean that a network element performs corresponding processing in an objective case. They are not intended to limit time, do not require a determining action when the network element is implemented, and do not imply that there is any other limitation.

It should be further understood that in this application, "At least one" means one or more, and "a plurality of" means two or more.

It should be further understood that in embodiments of this application, "B corresponding to A" indicates that B is associated with A, and B may be determined based on A. However, it should be further understood that determining B based on A does not mean that B is determined only based on A. B may alternatively be determined based on A and/or other information.

It should be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A meaning of an expression like "a project includes one or more of the following: A, B, and C" in this application, unless otherwise specified, generally means that the project may be any one of the following: A; B; C; A and B; A and C; B and C; A, B and C; A and A; A, A and A; A, A and B; A, A and C, A, B and B; A, C and C; B and B; B, B and B; B, B and C; C and C; C, C and C, and another combination of A, B and C. The above uses three elements: A, B, and C as an example to illustrate an optional item of the project. When an expression is "a project includes at least one of the following: A, B, ..., and X", to be specific, there are more elements in the expression, an item that may be applied to the project may alternatively be obtained according to the foregoing rules.

It may be understood that in embodiments of this application, the terminal device and/or the network device may perform some or all of the steps in embodiments of this application. These steps or operations are merely examples. In embodiments of this application, other operations or variations of various operations may be further performed. In addition, the steps may be performed in different sequences presented in embodiments of this application, and it is possible that not all of the operations in embodiments of this application need to be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk drive, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multipath transmission method, comprising:
receiving, by a user plane function node, second information from a session management function node, wherein the second information is used by the user plane function node to replicate, to a second communication path, data that is of a remote terminal and that is transmitted through a first communication path; and
replicating, by the user plane function node based on the second information to the second communication path, the data that is of the remote terminal and that is transmitted through the first communication path, wherein
the first communication path is a first session of the remote terminal, and the second communication path comprises: a second session of a relay terminal corresponding to the remote terminal and a sidelink between the relay terminal and the remote terminal; or the second communication path is a first session of the remote terminal, and the first communication path comprises: a second session of a relay terminal corresponding to the remote terminal and a sidelink between the relay terminal and the remote terminal.

2. The method according to claim 1, wherein the second communication path is the first session, and the second session is only for transmitting the data of the remote terminal; the second information comprises a first address, wherein the first address is an address corresponding to the first session; and
the method further comprises:
receiving, by the user plane function node, a first data packet of the remote terminal, wherein the first data packet comprises first data of the remote terminal and an address corresponding to the second session, wherein
the replicating, by the user plane function node based on the second information to the second communication path, the data that is of the remote terminal and that is transmitted through the first communication path comprises:
sending, by the user plane function node, the first data packet by using the second session; and
sending, by the user plane function node, a second data packet by using the first session, wherein the second data packet comprises the first address and the first data.

3. The method according to claim 1, wherein the second communication path is the first session; the second information comprises a first address and a second address, wherein the first address is an address corresponding to the first session, and the second address is an address for transmitting the data of the remote terminal by using the second session; and
the method further comprises:
receiving, by the user plane function node, a third data packet of the remote terminal, wherein the third data packet comprises second data of the remote terminal and the second address, wherein
the replicating, by the user plane function node based on the second information to the second communication path, the data that is of the remote terminal and that is transmitted through the first communication path comprises:
sending, by the user plane function node, the third data packet by using the second session; and
sending, by the user plane function node, a fourth data packet by using the first session, wherein the fourth data packet comprises the first address and the second data.

4. The method according to claim 1, wherein the first communication path is the first session;
the second information comprises a second address, wherein the second address is an address for transmitting the data of the remote terminal by using the second session; and
the method further comprises:
receiving, by the user plane function node, a fifth data packet of the remote terminal, wherein the fifth data packet comprises third data of the remote terminal and an address corresponding to the first session, wherein
the replicating, by the user plane function node based on the second information to the second communication path, the data that is of the remote terminal and that is transmitted through the first communication path comprises:
sending, by the user plane function node, the fifth data packet by using the first session; and
sending, by the user plane function node, a sixth data packet by using the second session, wherein the sixth data packet comprises the second address and the third data.

5. The method according to any one of claims 1 to 4, wherein the second information comprises replication indication information, wherein the replication indication information indicates to replicate, to the second communication path, the data that is of the remote terminal and that is transmitted through the first communication path.

6. A multipath transmission method, comprising:
receiving, by a session management function node, first information from a first device, wherein the first information is for replicating, to a second communication path, data that is of a remote terminal and that is transmitted through a first communication path; and
sending, by the session management function node, second information to a user plane function node based on the first information, wherein
the user plane function node is a user plane function node corresponding to the first communication path, and the second information is used by the user plane function node to replicate, to the second communication path, the data that is of the remote terminal and that is transmitted through the first communication path, wherein
the first communication path is a first session of the remote terminal, and the second communication path comprises: a second session of a relay terminal corresponding to the remote terminal and a sidelink between the relay terminal and the remote terminal; or the second communication path is a first session of the remote terminal, and the first communication path comprises: a second session of a relay terminal corresponding to the remote terminal and a sidelink between the relay terminal and the remote terminal.

7. The method according to claim 6, wherein the first device is the relay terminal or a policy control function node, the second communication path is the first session, and the second session is only for transmitting the data of the remote terminal; and
the second information comprises a first address, wherein the first address is an address corresponding to the first session.

8. The method according to claim 7, wherein the first information comprises: an identifier of the first session and an identifier of the remote terminal; and
the method further comprises:
determining, by the session management function node, the first address based on the first information.

9. The method according to claim 7, wherein the first information comprises the first address.

10. The method according to claim 6, wherein the first device is the relay terminal or a policy control function node, and the second communication path is the first session; and
the second information comprises a first address and a second address, wherein the first address is an address corresponding to the first session, and the second address is an address for transmitting the data of the remote terminal by using the second session.

11. The method according to claim 10, wherein the first information comprises: an identifier of the first session and an identifier of the remote terminal; and
the method further comprises:
determining, by the session management function node, the first address based on the identifier of the first session and the identifier of the remote terminal; and
determining, by the session management function node, the second address based on the identifier of the remote terminal.

12. The method according to claim 10, wherein the first information comprises: an identifier of the first session, an identifier of the remote terminal, and the second address; and
the method further comprises:
determining, by the session management function node, the first address based on the identifier of the first session and the identifier of the remote terminal.

13. The method according to claim 10, wherein the first information comprises the first address and the second address.

14. The method according to claim 6, wherein the first device is the remote terminal or a policy control function node, and the first communication path is the first session; and
the second information comprises a second address, wherein the second address is an address for transmitting the data of the remote terminal by using the second session.

15. The method according to claim 14, wherein the first information comprises: an identifier of the second session and an identifier of the relay terminal; and
the method further comprises:
determining, by the session management function node, the second address based on the first information.

16. The method according to claim 14, wherein the first information comprises the second address.

17. The method according to any one of claims 6 to 16, wherein the first information comprises replication indication information; and/or
the second information comprises the replication indication information, wherein
the replication indication information indicates to replicate, to the second communication path, the data that is of the remote terminal and that is transmitted through the first communication path.

18. A multipath transmission method, comprising:
obtaining, by a remote terminal, third information; and
sending, by the remote terminal, the third information to a second device, wherein the third information is for replicating, to a second communication path, data that is of the remote terminal and that is transmitted through a first communication path, wherein
the first communication path is a first session of the remote terminal, and the second communication path comprises: a second session of a relay terminal corresponding to the remote terminal and a sidelink between the relay terminal and the remote terminal; or the second communication path is a first session of the remote terminal, and the first communication path comprises: a second session of a relay terminal corresponding to the remote terminal and a sidelink between the relay terminal and the remote terminal.

19. The method according to claim 18, wherein the second device is the relay terminal, and the second communication path is the first session; and
the third information comprises an identifier of the first session or a first address, wherein the first address is an address corresponding to the first session.

20. The method according to claim 18, wherein the second device is a session management function node, the first communication path is the first session, and the second session is only for transmitting the data of the remote terminal; and
the third information comprises an identifier of the second session and an identifier of the relay terminal.

21. The method according to claim 18, wherein the second device is a session management function node, and the first communication path is the first session; and
the third information comprises a second address, wherein the second address is an address for transmitting the data of the remote terminal by using the second session, wherein
the obtaining, by a remote terminal, third information comprises:
receiving, by the remote terminal, the second address from the relay terminal.

22. The method according to any one of claims 18 to 21, wherein the third information comprises replication indication information, wherein the replication indication information indicates to replicate, to the second communication path, the data that is of the remote terminal and that is transmitted through the first communication path.

23. A multipath transmission method, comprising:
receiving, by a relay terminal, third information from a remote terminal, wherein the third information is for replicating, to a second communication path, data that is of the remote terminal and that is transmitted through a first communication path;
sending, by the relay terminal, first information to a session management function node based on the third information, wherein the first information is for replicating, to the second communication path, the data that is of the remote terminal and that is transmitted through the first communication path, wherein
the first communication path comprises: a second session of the relay terminal corresponding to the remote terminal and a sidelink between the relay terminal and the remote terminal, and the second communication path is a first session of the remote terminal.

24. The method according to claim 23, wherein the third information comprises an identifier of the first session.

25. The method according to claim 24, wherein the first information comprises:
the identifier of the first session and an identifier of the remote terminal; or
the identifier of the first session, an identifier of the remote terminal, and a second address, wherein the second address is an address used by the relay terminal to transmit the data of the remote terminal by using the second session.

26. The method according to claim 23, wherein the third information comprises a first address, wherein the first address is an address corresponding to the first session.

27. The method according to claim 26, wherein the first information comprises:
the first address; or
the first address and a second address, wherein the second address is an address used by the relay terminal to transmit the data of the remote terminal by using the second session.

28. A communication apparatus, comprising a processor and a memory, wherein the processor is coupled to the memory, the memory is configured to store a computer program, and the processor is configured to execute the computer program stored in the memory to implement the method according to any one of claims 1 to 27.

29. A computer-readable storage medium, comprising a computer program, wherein when the computer program is run on a computer, the computer is enabled to perform the method according to any one of claims 1 to 27.

30. A computer program product, comprising a computer program, wherein when the computer program is run, the method according to any one of claims 1 to 27 is performed.
